# EUROPÄISCHE PATENTSCHRIFT

(11) **EP 1 907 156 B1**
(45) Veröffentlichungstag und Bekanntmachung des Hinweises auf die Patenterteilung: **15.07.2015**
(21) Anmeldenummer: 05773760.3
(22) Anmeldetag: 22.07.2005
(51) Int. Cl.: B23C 3/06, B23Q 1/48

(54) **VERFAHREN ZUR FEINBEARBEITUNG VON KURBELWELLEN UND BEARBEITUNGSZENTRUM DAFÜR**
METHOD FOR FINE-MACHINING CRANKSHAFTS AND MACHINING CENTRE THEREFOR
PROCEDE D'USINAGE DE PRECISION D'ARBRES-MANIVELLES ET CENTRE D'USINAGE CORRESPONDANT

(43) Veröffentlichungstag der Anmeldung: 09.04.2008
(73) Patentinhaber: Gebr. Heller Maschinenfabrik GmbH, D-72622 Nürtingen (DE)
(72) Erfinder: FAIGLE, Bernd, 72622 Nürtingen (DE); MÄRKER, Wolfgang, 72636 Linsenhofen (DE)
(74) Vertreter: Rüger, Barthelt & Abel
(86) Internationale Anmeldenummer: PCT/EP2005/008083
(87) Internationale Veröffentlichungsnummer: WO 2007/009481

(56) Entgegenhaltungen:
- EP-A- 0 967 038
- WO-A-96/39269
- DE-A1- 19 714 677
- DE-A1- 19 749 940

## Beschreibung

Die Erfindung betrifft ein Verfahren zur Feinbearbeitung von Wellen gemäß dem Oberbegriff des Patentanspruchs 1.

Kurbelwellen wurden, wie in der DE 197 14 677 C2 zusammengefasst ist, bislang häufig in einem Verfahren hergestellt, bei dem der Materialabtrag von den Lagerstellen der urgeformten, also gegossenen oder geschmiedeten Kurbelwelle in drei aufeinander folgenden Bearbeitungsfolgen durchgeführt wurde. In einer ersten Bearbeitungsfolge wurde eine Grobbearbeitung mit geometrisch bestimmter Schneide durchgeführt. Angewendete Verfahren waren Drehen, Drehräumen, Dreh-Drehräumen, Innenrundfräsen und Außenfräsen, Drehfräsen und anderes. Der Materialabtrag liegt hierbei im Millimeterbereich. Die gewünschten Lagerdurchmesser werden mit einem Aufmaß von einigen Zehntel Millimeter erzeugt.

Ah diesen Schritt schließt sich in der Regel ein Härtevorgang an, in dem die Kurbelwelle thermisch gehärtet oder rolliert oder anderweitig bearbeitet wird. An diesen Schritt schließt sich die Arbeitsfolge zur Feinbearbeitung an, bei der mittels Schleifwerkzeugen, insbesondere an den Hauptlagern und an den Hublagern in der Kurbelwelle die gewünschten Maße erzeugt werden. Dabei wird Material im Zehntelmillimetierbereich abgetragen. An diese Bearbeitungsfolge schließen sich lediglich noch Arbeitsschritte zum Finishen an, bei denen die gewünschte Oberflächengüte erzeugt wird.

Dieser hier grob beschriebene Bearbeitungsablauf wurde gemeinhin wegen der notwendigen Schleifoperationen als nachteilig angesehen. Der beim Schleifen erzeugte Materialabtrag erfolgt nass, d.h. unter ständiger Beaufschlagung mit Kühlschmiermitteln. Der anfallende Schleifschlamm ist problematisch und die Entsorgung ist teuer. Bei CBN-Schleifen besteht Verpuffungsgefahr. Es werden außerdem große Kühlschmiermittelmengen benötigt. Dennoch ist die Gefahr der Werkstücküberhitzung groß.

Hiervon ausgehend hat die DE 197 14 677 C2 vorgeschlagen, die Schleifverfahren durch Bearbeitungsverfahren mit geometrisch bestimmter Schneide zu ersetzen und hierzu insbesondere das Außenfräsen oder das Drehfräsen in Form von Hochgeschwindigkeitsfräsen einzusetzen. Dabei sollte mit wenig oder ohne Kühlschmiermittel (trocken) gearbeitet werden. Bei dem Fräsverfahren sollte eine Oberflächenrauheit mit der Rauheitskenngröße Ra erzeugt werden, die vorzugsweise kleiner als zwei Mikrometer ist. Damit sollte der Traganteil bei der Übergabe von der spanenden Bearbeitung an das Finishen, weniger als 50 % insbesondere weniger als 25 % des Traganteils betragen, wie er sich nach dem Finishen ergibt.

Auch die DE 197 49 940 A1, die ein Verfahren gemäß dem Oberbegriff des Patentanspruchs 1 offenbart, befasst sich damit bei der Kurbelwellenfertigung Schleifverfahren zu eliminieren. Die spanende Bearbeitung mit geometrisch bestimmter Schneide war danach so genau durchzuführen, dass die Rundheitsabweichung kleiner als zehn Mikrometer, die Durchmesserabweichung kleiner als 100 Mikrometer als positive Abweichung bezogen auf die Sollkontur nach dem Finishen und die Rauheit kleiner als zwei Mikrometer ist. Diese Werte ergeben sich aus den Anforderungen des Finishing-Prozesses, der keine wesentliche Geometrieänderung oder Maßänderung des Werkstücks mehr zulässt, sondern lediglich dessen Oberflächengüte beeinflusst.

Wenn bei der Feinbearbeitung von Bearbeitungsverfahren mit geometrisch unbestimmter Schneide, d.h. von Schleifverfahren, auf Bearbeitungsverfahren mit geometrisch-bestimmter Schneide, d.h. beispielsweise Fräsverfahren, übergegangen wird, bedeutet dies nicht per se eine Effizienzverbesserung. Zwar sind selbst vielfach gekröpfte Kurbelwellen von komplizierten Mehrzylindermotoren, wie beispielsweise von V6, V8, W8, V10, V12 und W12 LKW- oder PKW-Motoren widerstandsfähige und in sich steife Teile. Jedoch ist eine Abstützung der Kurbelwelle bei der Bearbeitung jeweils in der Nähe der gerade spanend bearbeiteten Stelle z.B. mittels Lünette üblich, z.B. um hinsichtlich der geforderten Bearbeitungsgenauigkeit die in unterschiedlichen Richtungen oder an unterschiedlichen Lagerstellen unterschiedlichen Steifigkeiten auszugleichen. Der Einsatz von Lünetten und deren Umsetzung während der Bearbeitung bedeutet aber einen erheblichen Aufwand.

Als Kurbelwellenmaterialien werden heute wegen der zunehmenden zu übertragenden Drehmomente sehr feste Stähle oder Gussmaterialien, wie z.B. 42 CrMo 4 oder Gusseisen mit Kugelgraphit GGG 60, GGG 70 oder GGG 80 verwendet. Vereinzelt werden sogar Mangansilizium-Stahllegierungen eingesetzt. Hier kommt der Bearbeitungsfolge und der Prozessführung große Bedeutung zu. Beispielsweise können zur Vermeidung zu großer Arbeitsdrücke Schleifbearbeitungen ohne weiteres auf mehrere Einzelbearbeitungsschritte aufgeteilt werden, bei denen jeweils ein verminderter Materialabtrag erzielt wird. Z.B. wir das Vorschleifen und das Fertigschleifen auf unterschiedliche Maschinen aufgeteilt, die Anzahl der Umläufe in den Maschinen wird erhöht und/oder in jeder Maschine wird von der Satzbearbeitung auf Einzelbearbeitung übergegangen. Bei der Zerspanung mit geometrisch bestimmter Schneide ist dies so nicht möglich. Vielmehr muss insbesondere bei der Zerspanung zäher Materialien eine Mindestspanstärke oder -dicke eingehalten werden, wodurch an dem Werkstück erhebliche Belastungen auftreten.

Des Weiteren können die mit dem Werkstück periodisch in Eingriff kommenden Schneiden eines Fräswerkzeugs Schwingungen der Kurbelwelle anregen, die eine Facettenbildung unterstützen und zu Maßabweichungen führen.

Obwohl somit vereinzelt Versuche unternommen worden sind, Schleifprozesse zu eliminieren und die Feinbearbeitung von Kurbelwellen im Fräsverfahren zu erreichen, haben sich derartige Verfahren wegen der damit verbundenen Schwierigkeiten hinsichtlich der Wiederholbarkeit nicht in die Großserie eingeführt. Außerdem tritt bei Fräsversuchen eigenartigerweise ein hoher Werkzeugverschleiß auf.

Davon ausgehend ist es eine Aufgabe der Erfindung, Maßnahmen zur maßgenauen Feinbearbeitung von Kurbelwellen mit geometrisch bestimmter Schneide anzugeben.

Diese Aufgabe wird mit dem Verfahren nach Anspruch 1 gelöst, wobei insbesondere die Serienfertigung ermöglicht wird. Außerdem wird ein Bearbeitungszentrum angegeben, das zur Durchführung des Verfahrens besonders geeignet ist.

Das erfindungsgemäße Verfahren führt die Feinbearbeitung einer Welle, insbesondere einer Nockenwelle oder einer Kurbelwelle, mit geometrisch bestimmter Schneide auf zwei Bearbeitungsfolgen zurück, die in zwei aufeinander folgenden Aufspannungen in einem oder in zwei nacheinander zu durchlaufenden Bearbeitungszentren durchzuführen sind. Dabei wird die Welle lediglich zweimal gespannt - ein erstes Mal in dem ersten Bearbeitungszentrum und ein zweites Mal in dem zweiten Bearbeitungszentrum.

In der ersten Aufspannung wird die grob bearbeitete Nocken- oder Kurbelwelle erstmalig fein bearbeitet. Die vorausgegangene Grobbearbeitung kann eine Schruppbearbeitung sein, in der die Nocken- oder Kurbelwelle mit einem Aufmaß von einigen Zehntel Millimetern schon relativ genau vorbearbeitet ist. Schruppbearbeitungsvorgänge können insbesondere Drehfräs- oder Wirbelfräsvorgänge oder Drehbearbeitungsvorgänge sein. Gegebenenfalls kann die Nocken- oder Kurbelwelle zur generellen oder partiellen Oberflächenverfestigung kugelgestrahlt oder rolliert worden sein. Außerdem kann die Nocken- oder Kurbelwelle einem thermischen Härtevorgang unterzogen worden sein, wobei ebenso wie beim Rollieren ein gewisser Verzug nicht auszuschließen ist.

Die erste Bearbeitungsfolge wird an der Welle in einer einzigen Aufspannung durchgeführt. Die Welle wird dabei an beiden Enden in entsprechenden Ausnehmungen, beispielsweise ihrer Flanschbohrung und ihrer Stummelbohrung, die zumindest grob vorgearbeitet ist, auf Spitzen aufgenommen. In der ersten Aufspannung ist die Welle vorzugsweise drehbar gelagert. Sie wird dazu beispielsweise zusätzlich zu der zentrierten Aufnahme auf den Spitzen mittels eines Futters oder beidseitig gefasst, um sie gezielt zu drehen und drehpositionieren zu können. In dieser Aufspannung erfolgt wenigstens die Bearbeitung ihres ersten und ihres letzten zentrischen Lagers, vorzugsweise aller zentrischer Lager (Hauptlager- bei Kurbelwellen), und die Bearbeitung ihrer exzentrischen Lager (Hublager bei Kurbelwellen). Hierbei handelt es sich im Allgemeinen um Kreiszylinderflächen. Im Falle von Nockenwellen handelt es sich bei den exzentrischen Lagern um Zylinderflächen mit nichtkreisförmigem Querschnitt. Optional können allerdings auch an diese Zylinderflächen anschließende Planflächen (Anlaufflächen, Ölbund usw.) spanend fein bearbeitet werden. Die Bearbeitung erfolgt dabei auf Zeichnungsmaß, jedenfalls aber formgenau. Die zentrischen und exzentrischen Lager (Haupt- und Hublager) werden somit mit ihrem Solldurchmesser eventuell bis auf ein geringstes Aufmaß hergestellt, das beim Superfinishing (auch als Mikrofeinschleifen bezeichnet) abgetragen wird. In der ersten Bearbeitungsfolge können des Weiteren in der gegebenen Aufspannung weitere Funktionsflächen, wie das Passlager und der Flanschdurchmesser, feinbearbeitet werden.

Ist die Welle soweit bearbeitet, wird sie in einer zweiten Aufspannung z.B. in einem zweiten Bearbeitungszentrum, einer weiteren und abschließenden Feinbearbeitung unterzogen. Es dienen dabei feinbearbeitete Zylinderflächen als Bezugsflächen zur Aufspannung der Kurbelwelle. Beispielsweise können im Falle einer Kurbelwelle Hauptlager, vorzugsweise das erste und das letzte Hauptlager, als Spannflächen dienen. Um die Kurbelwelle in definierter Winkelposition zu bearbeiten, können ein oder mehrere Hublager als Bezugsflächen dienen. Beispielsweise werden die als Bezugsflächen dienenden Hauptlager von entsprechenden Prismenspannsystemen aufgenommen. Das zur Drehreferenzierung verwendetete Hublager liegt dabei auf einer Anlagefläche auf oder wird gegen diese geklemmt. Alternativ kann die Drehreferenzierung durch Antasten eines Hublagers mit einem Messtaster erfolgen. Außerdem ist es möglich, die Welle unabhängig vom Aufmaß zentrisch zu spannen. Bearbeitet werden in der zweiten Bearbeitungsfolge vorzugsweise zumindest Flanschbohrungen, die Nadellagerbohrung und die Stummelbohrung. Auch können der Flanschdurchmesser und der Stummelaußendurchmesser bearbeitet werden.

Das Spannen der Kurbelwelle erfolgt dabei vorzugsweise ohne Relativbewegung zwischen der Spannfläche und der als Bezugsfläche dienender Zylinderfläche, um die Ausbildung von Spannmarken an den bereits feinbearbeiteten Zylinderflächen zu vermeiden. In der zweiten Aufspannung werden in dem zweiten Bearbeitungszentrum beispielsweise Flansch- und Stummelbohrungen, die Nadellagerbohrungen und der Stummelaußendurchmesser feinbearbeitet. Dies kann beispielsweise durch Zirkularfräsen geschehen.

Bei dem vorgestellten Arbeitsablauf sind die in der ersten Bearbeitungsfolge und in der zweiten Bearbeitungsfolge auftretenden Taktzeiten ungefähr gleich, was eine bei Verwendung zweier Bearbeitungszentren gleichmäßige Maschinenauslastung ermöglicht. Treten unterschiedliche Taktzeiten auf, können in aufeinander folgenden Fertigungsgruppen Bearbeitungszentren in unterschiedlicher Zahl verwendet werden. Des Weiteren dienen die in der ersten Bearbeitungsfolge genau hergestellten Haupt- und Hublager als Bezugsflächen für die weitere Bearbeitung. Dies vermeidet das Auftreten von Maßketten und stellt somit die einfache einstufige Realisierung der von der Fertigungszeichnung vorgegebenen Maße sicher. Die Aufspannung erfolgt nämlich im Wesentlichen in der gleichen Weise wie die Angabe der Maße und Maßbezüge in der Zeichnung. Beispielsweise ist die Lage der Nadellagerbohrung in Bezug auf das erste Hauptlager an dem Flansch festgelegt. Nachdem die Hauptlagerfläche als Spann- und Bezugsfläche zur Herstellung der Nadellagerbohrung dient, ist hier eine systembedingte Maßabweichung weitgehend ausgeschlossen.

Mit der genannten Aufteilung der Feinbearbeitungsvorgänge auf eine erste Bearbeitungsfolge für Haupt- und Hublager sowie gegebenenfalls Passlager, Anlaufflächen und Flanschdurchmesser und eine zweite Bearbeitungsfolge für Flansch- und Stummelbohrungen sowie Stummelaußendurchmesser wird erreicht, dass jede zu bearbeitende Funktionsfläche jeweils in einem einzigen Arbeitsgang gemäß Konstruktionszeichnung gewissermaßen in einem Zuge und ohne Umspannung hergestellt werden kann, was die gewünschte Bearbeitungsgüte und Genauigkeit ermöglicht. Die Aufteilung, in welcher Aufspannung bzw. in welchem Bearbeitungszentrum die jeweiligen Flansch- und Stummeldurchmesser gefertigt werden, kann von Fall zu Fall entschieden werden und ist abhängig von dem Typ der Kurbelwelle.

Bei der Feinbearbeitung wird insbesondere in der ersten Bearbeitungsfolge vorzugsweise mit einer mittleren Schnittgeschwindigkeit von 300 m/min bis 400 m/min gearbeitet. Bei der Bearbeitung gehärteter Wellen können Schnittgeschwindigkeiten von mehr als 1000 m/min, vorzugsweise über 1500 m/min erreicht werden. Des Weiteren wird vorzugsweise darauf geachtet, dass keine Stelle der Schneidkante eine Schnittgeschwindigkeit von 20 m/min unterschreitet. Wird als Feinbearbeitungsverfahren das orthogonale Drehfräsen angewendet, gilt dies entsprechend für das radial äußere bzw. das radial innere Ende der Schneidkante.

Es wird darauf geachtet, dass eine maximale mittlere Spandicke von z.B. 0,1 mm nicht überschritten wird. Dadurch wird die Zerspankraft auf einen relativ geringen Wert festgelegt und die Bearbeitungsgenauigkeit erhöht. Es wird jedoch vorzugsweise auch eine minimale Spandicke von z.B. 0,01 mm, mindestens aber 0,005 mm nicht unterschritten, was den Werkzeugverschleiß minimiert.

Die Feinbearbeitung, d.h. der Spanabtrag, wird in höchstens zwei oder drei Umläufen der Kurbelwelle erzielt. Dies hat insbesondere bei Wellen. z.B. Kurbelwellen aus sehr zähem Stahl Bedeutung und führt zu der gewünschten Oberflächenqualität und zu einem lediglich geringen Werkzeugverschleiß. Bei Kurbelwellen und Verzicht der Abstützung derselben mittels Lünetten oder Reduktion der Lünettenzahl kann es zweckmäßig sein, die spanende Feinbearbeitung eines Hauptlagers oder eines Hublagers auf zwei Kurbelwellenumläufe aufzuteilen. Aufgrund der Abhängigkeit der an sich sehr großen Steifigkeit der Kurbelwelle von dem Drehwinkel in Bezug auf die Fräserachse kann die Kurbelwelle während der Feinbearbeitung in Radialrichtung geringfügigst ausweichen, was wiederum zu Unrundheiten der bearbeiteten Zylinderflächen führen kann. Diese Unrundheiten, die bei dem ersten Umlauf erzeugt werden, können, wenn sie systematisch auftreten und dies durch Messungen verifiziert ist, in dem zweiten Umlauf beseitigt werden, indem dann eine Relativverstellung zwisehen Arbeitsspindel und Kurbelwelle entsprechend dem jeweiligen Drehwinkel der Kurbelwelle vorgenommen wird. Werden auf diese Weise maßhaltig runde feinbearbeitete Hauptlager und Hublager erzeugt, kann unter Zugrundelegung der gleichen kurbelwellenwinkelabhängigen Abstandsverstellung zwischen Arbeitsspindel und Kurbelwelle das Haupt- bzw. Hublager auch in einem einzigen Umlauf gefräst werden. Treten hierbei noch immer geringere systematische Abweichungen auf, können diese Durchmesserabweichungen erfasst und durch entsprechendes Gegensteuern der Abstandsverstellung weiter kompensiert werden.

Die Messungen können dabei an jeder Nocken- oder Kurbelwelle oder auch lediglich stichprobenhaft an einigen Nocken- oder Kurbelwellen oder nur während der Einarbeitungszeit eines bestimmten Nocken- oder Kurbelwellentyps vorgenommen werden. Wird aus den gemessenen Rundheitsabweichungen ein Erwartungswert für die Rundheitsabweichung gebildet und ist dessen Streuung nicht allzu groß, ist eine Kompensation wie oben erläutert möglich. Die zu erwartende Rundheitsabweichung und die entsprechenden Kompensationsmaßnahmen werden vorzugsweise für jedes zentrische Lager und für jedes exzentrische Lager gesondert bestimmt. Sie ergeben sich aus den jeweils individuellen Steifigkeiten der Kurbelwelle hinsichtlich Belastung an dem jeweils betrachteten Lager und können somit unterschiedlich sein. Die gesonderte Erfassung dieser Rundheitsabweichungen ermöglicht die präzise Feinbearbeitung aller Lager.

Vorzugsweise wird die Feinbearbeitung eines zentrischen Lagers wie auch eines exzentrischen Lagers jeweils auf gesamter Zylinderlänge in einem Bearbeitungsschritt ausgeführt. Wird die Lagerfläche durch einen Drehfräsvorgang erzeugt, bei dem ein Fräswerkzeug mit quer zur Welle gerichteter Drehachse zur Anwendung kommt, ist der Durchmesser des Fräswerkzeugs, d.h. der Durchmesser des von der äußeren Schneidenecke des Fräswerkzeugs beschriebenen Flugkreises im Wesentlichen genauso groß wie die Länge des exzentrischen Lagers. Schließen sich an die zylindrische Lagerfläche des exzentrischen Lagers oder zentrischen Lagers Freistich an, bildet die Breite des Freistichs eine Toleranz innerhalb derer der Fräser einen etwas größeren oder etwas kleineren Durchmesser aufweisen kann.

Es ist auch möglich, mit dem Fräser die sich bei einer Kurbelwelle an das Hublager bzw. das Hauptlager anschließenden Ölbundflächen mit zu bearbeiten. Diese entstehen im Anschluss an die zylinderische Haupt- oder Hublagerfläche als Planflächen. Des Weiteren ist es möglich, zu diesen Planflächen einen gewissen Sicherheitsabstand zu lassen, indem der Durchmesser des Fräswerkzeugs geringer gewählt wird als der Abstand zwischen den planen einander gegenüberliegenden Ölbundflächen. In vorteilhaften Fällen wird die zylinderische Fläche des Hauptlagers oder des Hublagers jedoch im ganzen bearbeitet, ohne dass eine Relativverstellung zwischen dem Fräswerkzeug und der Kurbelwelle bezogen auf die Axialrichtung der Kurbelwelle vorgenommen wird. Dies vermeidet die Ausbildung von Absätzen und Stufen auf der feinbearbeiteten, gefrästen Lagerfläche. Es ist alternativ möglich, eine axiale Relativverstellung durchzuführen, so dass die Achse des Fräswerkzeugs-bezüglich der Zylinderfläche eine Schraubenlinie markiert.

Die Feinbearbeitung wird jeweils vorzugsweise bis zu einer solchen maximalen Rundheitsabweichung durchgeführt, die bis auf einen im Superfinish erreichbaren Materialabtrag an die Zeichnungsmaße angenähert ist. Damit wird mit dem Drehfräsverfahren die für das Endfinish (Superfinish) erforderliche Rundheit erreicht. Außerdem wird eine durchschnittliche Rauheit von z.B. weniger als fünf vorzugsweise weniger als zwei µm erzeugt.

Es wird angestrebt, an der bearbeiteten Lagerfläche eine Rauheit Ra zu erzeugen, die in einem mittleren, ringförmigen Bereich größer ist als in randnahen Bereichen. Dies ergibt unterschiedliche Traganteile und Ölhaltefähigkeiten gegebenenfalls auch noch nachdem sich anschließenden Superfinish. Für einfache Anwendungsfälle wird erwogen, auf das Superfinish zu verzichten. Vorzugsweise ist die Rauheit Ra in einem gewählten, beispielsweise einem mittleren ringförmigen Bereich mindestens doppelt so groß wie in anderen, beispielsweise randnahen Bereichen.

Zur Beeinflussung der Rauheit, z.B. Vergrößerung derselben in den randnahen Bereichen bzw. der Verminderung der Rauheit in mittleren Bereichen kann es zweckmäßig sein, beim orthogonalen Drehfräsen den Freiwinkel an dem Stirnfräser zum Fräserzentrum hin gegebenfalls bis auf Null kleiner werden zu lassen, um an der Schneide radial innen und radial außen unterschiedliche Schnittverhältnisse zu schaffen: Reibt die Freifläche über die bearbeitete Lagerfläche kann eine zusätzliche Glättung erzielt werden. Umgekehrt kann die Rauheit in einem mittleren Lagerbereich vergrößert werden, wenn der Freiwinkel an den zuständigen Schneidenbereichen etwas größer gewählt wird. Zusätzlich kann die Rauheit in dem mittleren Lagerbereich durch Verminderung des Versatzes V vergrößert werden.

Durch Kombination von Flächenbereichen unterschiedlicher Rauheit können optimale Trageigenschaften und Ölhaltefähigkeiten miteinander kombiniert werden.

Die Feinbearbeitung erfolgt in der ersten und oder in der zweiten-Bearbeitungsfolge vorzugsweise mit einer im Wesentlichen in einer Ebene geführten Schneide. Das Drehfräsen wird dabei als orthogonales Drehfräsen ausgestaltet, bei dem die Drehachse des an seinem stirnseitigen Ende mit wenigstens einer, vorzugsweise mehreren Schneidkanten versehenen Fräswerkzeuges rechtwinklig zu der Längsachse der Welle orientiert ist, so dass das Fräswerkzeug auf nahezu seinem gesamten Durchmesser schneidet. Die Schneiden des Fräswerkzeugs liegen dabei in einer Ebene. Es ist jedoch auch möglich, die stirnseitigen Schneiden des Fräswerkzeugs auf eine Kegelfläche zu legen, wobei der Öffnungswinkel dieses Kegels näherungsweise 180°, d.h. beispielsweise 175° oder etwas mehr beträgt. Entsprechend wird die Drehachse des Fräswerkzeugs um wenige Grad relativ zu der Drehachse der Welle geneigt. Der Fräser arbeitet dabei nur auf seinem halben Durchmesser oder etwas weniger. Die zylindrische Lagerfläche wird somit nur auf halber Länge bearbeitet. In einem zweiten Durchlauf mit gegensinnig geneigtem Fräser kann die andere Hälfte der zylindrischen Lagerfläche bearbeitet werden. Dies kann mit dem gleichen Fräswerkzeug oder einem anderen Fräswerkzeug erfolgen, das beispielsweise zu dem ersten Fräswerkzeug gegensinnig dreht. Damit kann erreicht werden, dass beide Hälften der zylinderischen Lagerfläche unter gleichen Schnittbedingungen, d.h. beide im Gleichlauf oder beide im Gegenlauf bearbeitet werden.

Zur Bearbeitung der anschließenden Planflächen arbeitet der Fräser mit seinen Umfangsschneiden. Der Fräser arbeitet dabei nur auf einer Seite. In einem zweiten Durchlauf mit gegensinnig laufendem Fräser kann die andere Seite bearbeitet werden. Dies kann mit dem gleichen Fräswerkzeug oder einem anderen Fräswerkzeug erfolgen, das beispielsweise zu dem ersten Fräswerkzeug gegensinnig dreht. Damit kann erreicht werden, dass beide Planflächen unter gleichen Schnittbedingungen, d.h. beide im Gleichlauf oder beide im Gegenlauf bearbeitet werden.

Des Weiteren kann es zweckmäßig sein, eine gewisse, im Einzelfall beispielsweise, nur lediglich wenige Winkelminuten betragende Anstellung, d.h. Kippung der Fräserachse gegen die rechtwinklige Lage einzustellen, um beispielweise geringfügigste Verformungen der Kurbelwelle während der Bearbeitung auszugleichen. Dies kann durch Schrägstellung der Kurbelwelle erfolgen. Diese Schrägstellung ist für einen Umlauf der Kurbelwelle vorzugsweise nicht konstant, sondern kurbelwellenwinkelabhängig, um unterschiedlichen Steifigkeiten der Kurbelwelle in verschieden radialen Richtungen Rechnung zu tragen.

Anstelle des orthogonal ausgerichteten, mit seinen stirnseitigen Kanten schneidenden Fräswerkzeugs kann auch ein Innenrundfräser oder ein Außenrundfräser Anwendung finden. Dessen Durchmesser ist jeweils so groß, dass die Schneide, bezogen auf die Eingriffslänge oder Spanlänge noch immer im Wesentlichen in einer Ebene geführt ist. Beispielsweise beträgt der Durchmesser des Schneidenflugkreises deutlich mehr als 200 mm, während die Länge des abgetragenen Spans in der Größenordnung von allenfalls einem Millimeter liegt. Dabei wird vorzugsweise mit einzahnigen Werkzeugen bearbeitet. Es hat sich herausgestellt, dass mit diesen eine ungünstige Facettierung der bearbeiteten Zylinderfläche zu vermeiden oder wenigstens zu minimieren ist.

Die Bearbeitung wird vorzugsweise so geführt, dass in der Feinbearbeitung auf jeden Zylinderumfang mindestens 1000 vorzugsweise deutlich mehr als 2000 Schneideneingriffe kommen. Eine Facettenbildung ist nicht zu verzeichnen. Die bei der Übergabe an das Superfinish theoretisch vorhandene Welligkeit ist vorzugsweise geringer als 0,5 µm und insbesondere geringer als 0,15 µm, d.h. geringer als die Rauheit, also praktisch nicht vorhanden. Außerdem ist die Winkelabweichung der zylindrischen Fläche der Lager nach der Feinbearbeitung mit geometrisch bestimmter Schneide kleiner als von der Zeichnung vorgegeben, z.B. kleiner als 0,1°. Dies kann insbesondere auch bei etwas weniger steifen, z.B. langen, durch Lünetten wenig oder nicht unterstützten Nocken- oder Kurbelwellen durch die oben genannte geringe Schrägstellung der Welle während der Feinbearbeitung erreicht werden.

Die Feinbearbeitung wird vorzugsweise so eingestellt, dass im Rahmen der Bearbeitungsgenauigkeit exakt zylindrische Lagerflächen erzeugt werden, und zwar auch dann, wenn laut Zeichnung leichte konvexe oder konkave Bombierungen der Lagerflächen gewünscht sind. Diese werden, wenn sie weniger als 30 µm betragen, im nachfolgenden Superfinish erzeugt.

Wird eine konkave Bombierung gewünscht, wird zuvor die in der Feinbearbeitung in einem mittleren Ringbereich erzeugte Rauheit eher groß gewählt, um den nachfolgenden Materialabtrag in diesem Bereich zu erleichtern.

Wird die Bearbeitung der Zylinderfläche (Kreiszylinder oder Nockenfläche) mit einem Stirnfräser durch orthogonales Drehfräsen erzeugt, wird zwischen seiner Drehachse und der Wellenachse vorzugsweise ein Achsversatz von z.B. einigen Millimetern eingestellt. Mit diesem Achsversatz kann die Rauheitsverteilung auf der bearbeiteten Haupt- oder Hublagerfläche gezielt beeinflusst werden. Werden keine oder nur geringe Rauheitsunterschiede gewünscht, wird dieser Achsversatz vergrößert. Der Achsversatz kann auch während eines Umlaufs der Kurbelwelle variiert werden, um gewünschte Rauheitsverteilungen zu generieren. Der Achsversatz wird vorzugsweise so eingestellt, dass die Drehachse des Fräsers, d.h. sein Drehzentrum außer Eingriff mit der Welle bleibt.

Es hat sich für die Genauigkeit der Nocken- oder Kurbelwellenbearbeitung im Wege des orthogonalen Drehfräsens außerdem als vorteilhaft herausgestellt, wenn die Welle während der Bearbeitung der zentrischen und exzentrischen Lager jeweils zentrisch gespannt bleibt. Zur Bearbeitung exzentrischer Lager kann die Arbeitsspindel quer zu der Nocken- oder Kurbelwelle im Takt der Drehung auf und ab gefahren werden. Außerdem kann die Nocken- oder Kurbelwelle an die Arbeitsspindel heran und von dieser weggefahren werden. Die Bewegungen folgen dabei z.B. jeweils einer Sinus- bzw. Kosinusfunktion, die sich zu der Kreisorbitalbewegung des zylindrischen Hublagers überlagern. Bezogen auf das Maschinenbett als Bezugssystem bewegt sich das Hublager während der Fräsbewegung somit lediglich auf und ab. Dieser Bewegung folgt die Arbeitsspindel. Zusätzlich kann dieser Sinus- und Kosinusbewegung jeweils eine geringe Kompensationsbewegung überlager sein, die erforderlich sein kann, um eine Durchbiegung der Kurbelwelle auszugleichen oder ein gewünschtes Rauheitsprofil zu erzeugen. Dies gilt auch für die Nockenwellenbearbeitung, bei der sich die Bewegungen zur Nockenform überlagern.

Die Drehzahl des Fräswerkzeugs liegt mindestens 500, vorzugsweise mindestens 1000 mal über der Drehzahl der Kurbelwelle. Sie wird darüber hinaus vorzugsweise so festgelegt, dass der periodische Schneideneingriff keine Schwingungen der Welle anregt, d.h. außerhalb deren Eigenfrequenz liegt. Dabei wird auch in Betracht gezogen, mehrere Schneiden an der Stirnseite des Fräswerkzeugs in ungleichmäßigen Winkelabständen anzuordnen. Auch diese Maßnahme kann Schwingungsanregungen reduzieren.

Das vorgestellte Bearbeitungsverfahren wird vorzugsweise auf einem, weiter vorzugsweise zwei jeweils entsprechend eingerichteten Bearbeitungszentren durchgeführt, die auf ihrem Maschinenbett zwei in größerem Abstand zueinander parallel verfahrbar angeordnete Schlitten aufweisen. Diese sind gelenkig mit einer Werkstückaufnahme verbunden, die außerdem vorzugsweise über einen Längenausgleich verfügt. Die beiden linear verfahrbaren Schlitten können unabhängig voneinander angesteuert und verfahren werden, wodurch die Kurbelwelle in Bezug auf eine Arbeitsspindel geschwenkt werden kann. Diese Maßnahme kann zum Winkelausgleich von flexiblen Durchbiegungen der Kurbelwelle während der Bearbeitung genutzt werden. Sie ist darüber hinaus nutzbar zur Anbringung von Schrägbohrungen, wie beispielsweise Ölbohrungen, Entlastungsbohrungen oder dergleichen.

Die Bearbeitung wird vorzugsweise als Trockenbearbeitung durchgeführt. Entsprechend ist das Bearbeitungszentrum vorzugsweise staubdicht eingehaust.

Weitere Merkmale vorteilhafter Ausführungsformen der Erfindung ergeben sich aus der Zeichnung der dazugehörigen Beschreibung oder Ansprüchen.

In der Zeichnung ist ein Ausführungsbeispiel der Erfindung veranschaulicht. Es zeigen:
- Figur 1: ein Bearbeitungszentrum, in schematisierter vereinfachter Perspektivdarstellung,
- Figur 2: eine Kurbelwelle in einer ersten Aufspannung zur Durchführung einer ersten Bearbeitungsfolge, in schematisierter Draufsicht,
- Figur 3: ein Hauptlager während der orthogonalen Drehfräsbearbeitung, in schematisierter Darstellung,
- Figur 4: das Hauptlager nach Figur 3 nach der Bearbeitung, in schematisierter Draufsicht,
- Figur 5: das Hauptlager nach Figur 3 und 4 mit Veranschaulichung verschiedener Aufmaße, in stark überhöhter Darstellung,
- Figur 6: das Hublager nach Figur 3 bis 5 während der Bearbeitung, in ausschnittweiser und überhöhter Darstellung,
- Figur 7: die Kurbelwelle nach Figur 2 während der Bearbeitung von Flansch und Stummel in einer zweiten Aufspannung, in schematisierter Draufsicht,
- Figur 8: die Kurbelwelle in einer Bearbeitungsstufe entsprechend Figur 2, jedoch mit Durchbiegungskompensation, in schematisierter Draufsicht,
- Figur 9 und 10: aufs äußerste schematisierte und vereinfachte Draufsichten auf den Werkstückschlitten des Verarbeitungszentrums nach Figur 1,
- Figur 11 bis 13: verschieden Möglichkeiten der Haupt- oder Hublagerfräsbearbeitung, in schematisierter Schnittdarstellung, wobei eine an dem Werkzeug angebrachte Schraffur die mit dem Werkstück in Eingriff befindliche Schneide des Werkzeugs andeutet,
- Figur 14: ein vergrößertes Detail der Figur 13 und
- Figur 15 bis 17: weitere Möglichkeiten der Haupt- oder Hublagerfräsbearbeitung, in schematisierter Schnittdarstellung, wobei eine an dem Werkzeug angebrachte Schraffur die mit dem Werkstück in Eingriff befindliche Schneide des Werkzeugs andeutet,.

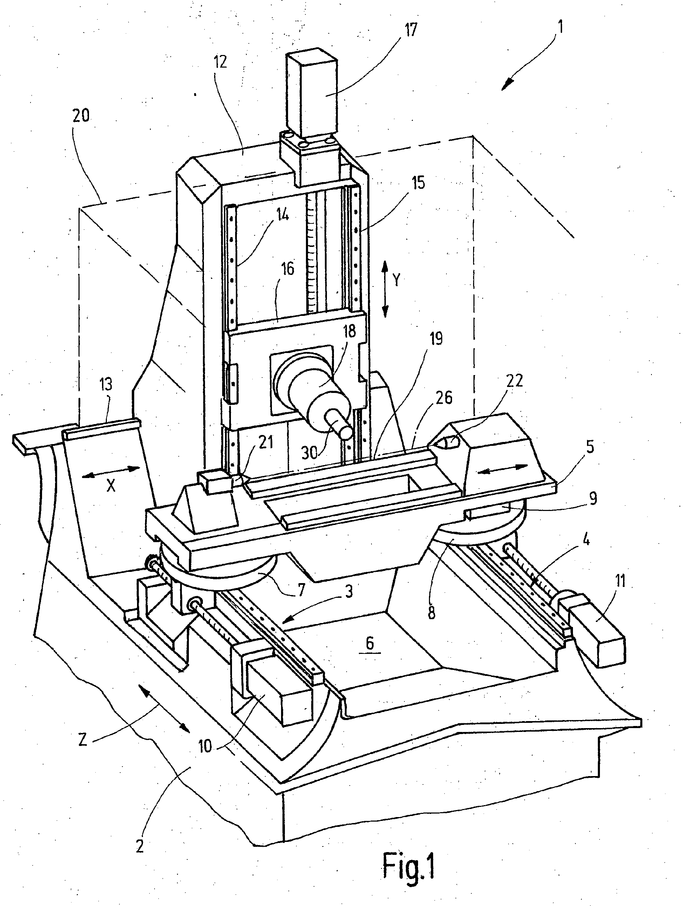

In Figur 1 ist ein Bearbeitungszentrum 1 veranschaulicht, das ein Maschinenbett 2 mit zwei im Abstand parallel zueinander angeordneten Linearführungen 3, 4 für einen Werkstückträger 5 aufweist. Die zwischen einander einen Spanaufnahmeraum 6 begrenzenden Linearführungen 3, 4 tragen jeweils einen linear verfahrbaren Schlitten 7, 8, die drehbar mit dem Werkzeugträger 5 verbunden sind. Außerdem ist zwischen zumindest einem der Schlitten, im Ausführungsbeispiel dem Schlitten 8, und dem Werkstückträger 5 eine Längenausgleichseinrichtung 9 angeordnet, mit der eine Längsbewegung des Werkstückträgers 5 in Bezug auf den Schlitten 8 möglich ist.

Den Linearführungen 3, 4 sind voneinander unabhängige Stellmotoren 10, 11 zugeordnet, die der Linearverstellung der Schlitten 7, 8 dienen. Die Stellmotoren 10, 11 können von einer zentralen Maschinensteuerung unabhängig angesteuert werden, um den Werkstückträger parallel zu verfahren oder auch um eine Vertikalachse zu verschwenken. Die Verstellrichtung der Linearführungen 3, 4 wird im Ausführungsbeispiel als Z-Richtung bezeichnet.

Auf dem Maschinenbett 2 ist eine quer zu der z-Richtung verstellbar gelagerte Ständer 12 angeordnet, die über eine Querführung 13 in X-Richtung bewegbar ist. Zur Verstellung des Ständers 12 dient ein nicht weiter veranschaulichter Servoantrieb. An der dem Werkstückträger 5 zugewandten Seite des Ständers 12 sind wiederum Vertikalführungen 14, 15 gelagert, die eine Bewegung des von ihnen getragenen Schlittens 16 in Y-Richtung zulassen. Zur Verstellung dient ein Servomotor 17. Der Schlitten 16 trägt eine Arbeitsspindel 18, die um eine Spindelachse 19 drehend antreibbar ist.

Das Bearbeitungszentrum 1 ist von einer lediglich gestrichelt angedeuteten Einhausung 20 umgeben, die wenigstens so dicht ist, dass die bei der spanenden Bearbeitung entstehenden Späne nicht aus dem Arbeitsraum herausgeworfen werden.

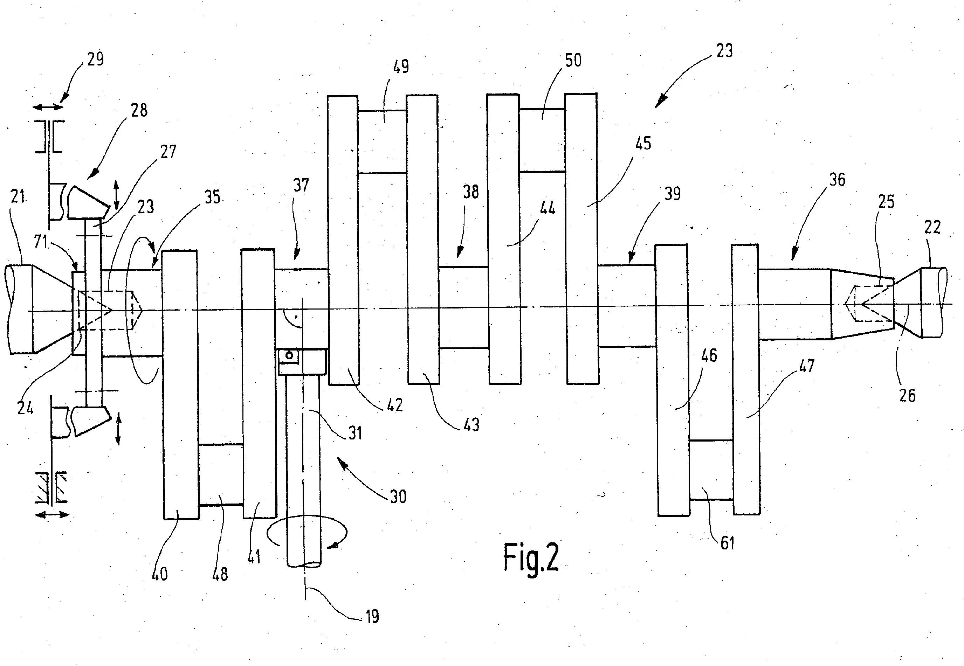

Das Bearbeitungszentrum 1 kann in dieser Grundbauform sowohl zur Durchführung einer ersten Bearbeitungsfolge zur Bearbeitung von Haupt- und Hublagern einer Kurbelwelle als auch zur Durchführung einer zweiten Bearbeitungsfolge zur Bearbeitung von Flansch und Stummel einer Kurbelwelle dienen. Für den ersten Fall wird es als erstes Bearbeitungszentrum eingesetzt und mit aus Figur 2 lediglich schematisch ersichtlichen Aufnahmen in Form von Spitzen 21, 22 ausgestattet, die auf dem Werkstückträger 5 angeordnet sind und eine Kurbelwelle 23 an ihren vorbereiteten stirnseitigen Bohrungen aufnehmen. Wenigstens eine der Spitzen, in Figur 1 die Spitze 22 ist auf die andere Spitze hin und von dieser weg verfahrbar. Dazu sind auf dem Werkstückträger 5 entsprechende Schienen angedeutet.

Die stirnseitigen Bohrungen werden durch die grob vorbearbeitete Nadellagerbohrung 23 bzw. eine konische Erweiterung 24 derselben und durch die gegenüberliegende Stummelbohrung 25 gebildet. Die Kurbelwellenachse 26 geht dabei zentrisch durch die Spitzen 21, 22 und ist in Längsrichtung des Werkstückträgers 5, d.h. etwa in X-Richtung orientiert. Zusätzlich kann die Kurbelwelle 23 z.B. an ihrem Flansch 27 von Spannbacken eines Spannfutters 28 ergriffen werden, das nach dem Zentrieren der Kurbelwelle 23 zwischen den Spitzen 21, 22 durch eine entsprechende Kupplung 29 drehfest an eine Drehpositiöniereinheit angeschlossen wird, die ebenfalls auf dem Werkstückträger 5 angeordnet ist. Dadurch kann die Kurbelwelle 23 zentriert aufgenommen und während der Bearbeitung definiert gedreht werden.

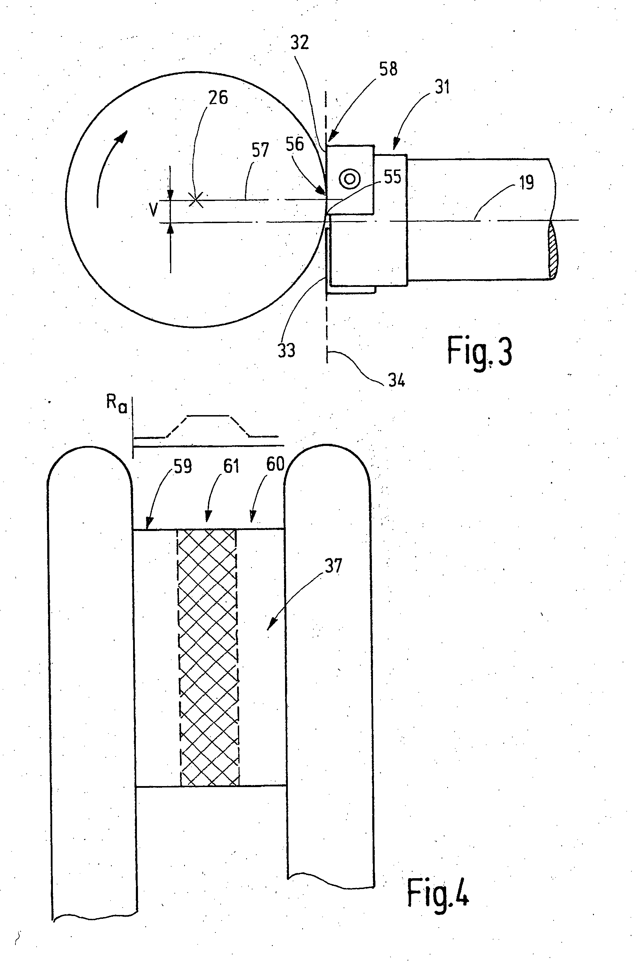

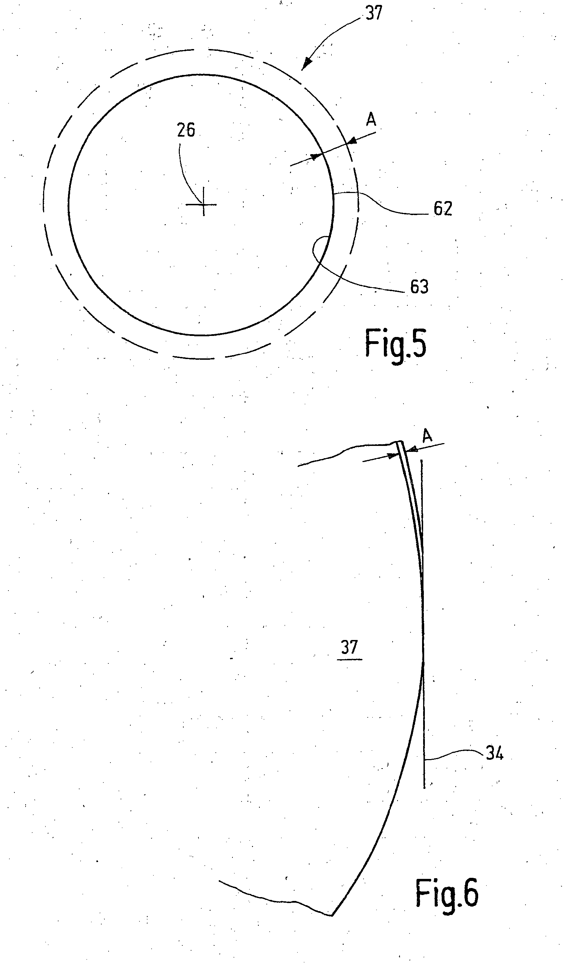

Die Arbeitsspindel 18 trägt ein Fräswerkzeug 30 in Form eines Stirnfräsers 31, der an seiner Stirnseite wenigstens eine vorzugsweise mehrere Schneidkanten 32, 33 aufweist (siehe Figur 3). Diese sind in einer gemeinsamen in Figur 6 schematisch veranschaulichten Ebene 34 angeordnet, die rechtwinklig zu der Spindelachse 19 steht.

Die Kurbelwelle 23 weist zumindest ein erstes und ein letztes Hauptlager 35, 36 sowie weitere Hauptlager 37, 38, 39 auf, die koaxial zu der Kurbelwellenachse 26 angeordnet und in einen vorausgegangenen Bearbeitungsvorgang grob vorgearbeitet sind. Sie sind dabei im Wesentlichen zylindrisch und haben zu den Sollmaßen ein Aufmaß von einigen wenigen Zehntel Millimetern. Zwischen Kurbelwangen 40, 41, 42, 43, 44, 45, 46, 47 sind zylindrische Hublager 48, 49, 50, 51 exzentrisch zu der Kurbelwellenachse 26 gehalten. Dargestellt in Figur 2 (sowie 7 und 8) sind zur Veranschaulichung der Bearbeitungsfolge Kurbelwellen für 4-Zylinder-4-Taktmotoren. Die nachfolgend beschriebene Bearbeitungsfolge eignet sich jedoch insbesondere auch für kompliziertete Kurbelwellen für Motoren mit mehr als vier Zylindern, die länger und mehrfach gekröpft sind, teilweise einen Hublagerversatz aufweisen (wie z.B. V6 oder V 10-Motoren) und die entsprechend weich, d.h. in Radialrichtung flexibel sind.

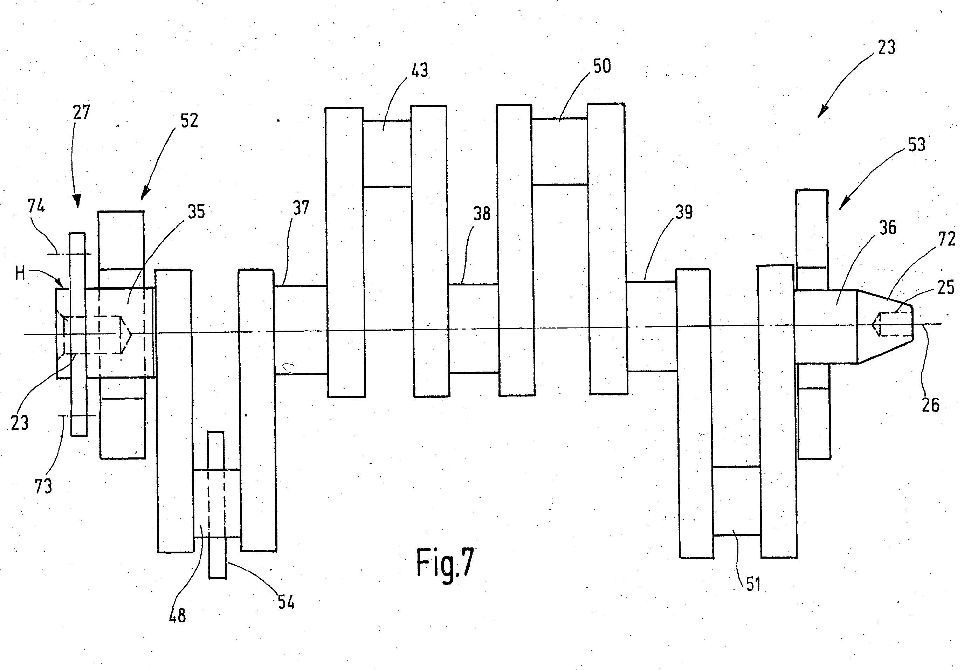

Das Bearbeitungszentrum 1, gemäß Figur 1 kann auch zur Durchführung einer zweiten Bearbeitungsfolge eingerichtet sein. Es bildet dann in einer Fertigungslinie beispielsweise das nachfolgende zweite Bearbeitungszentrum. Auf dem Werkstückträger 5 sind zur Aufnahme der Kurbelwelle 23 dann zumindest zwei Prismenspannsysteme 52, 53 angeordnet, die in Figur 7 schematisch veranschaulicht sind und die Kurbelwelle 23 an vorzugsweise ihrem ersten und ihrem letzten Hauptlager 35, 36 aufnehmen. Der Flansch 27 und ein sich an das Hauptlager 36 anschließender häufig zylindrischer Stummel 72 (eventuell mit einem konischen Abschnitt) bleiben frei. Die Prismenspannsysteme 52, 53 weisen jeweils ein unteres Prisma auf, das in Figur 7 dargestellt ist und in das die Kurbelwelle 23 eingelegt wird. Ein nicht weiter veranschaulichtes oberes Prisma oder sonstiges Druckstück belastet die Kurbelwelle 23 dann und drückt das jeweilige Hauptlager 35, 36 in das untere Prisma. Die Sparinung erfolgt ohne Gleitbewegung zwischen den entsprechenden Spannflächen und den Hauptlagern 36. Zur definierten Winkelpositionierung kann außerdem ein weiteres Anlage- oder Spannsystem 54 dienen., das die Kurbelwelle 23 an einem Hublager, vorzugsweise dem ersten Hublager 48, das dem Hauptlager 35 benachbart ist, fasst oder lagert, um die Drehposition der Kurbelwelle 23 zu der Kurbelwellenachse 26 vorzugeben. Es können auch zentrisch spannenden Spannsysteme mit geeigneten Materialpaarungen (weiche Backen oder Prismen) angewendet werden.

Mit den beiden entsprechenden modifizierten Bearbeitungszentren gemäß Figur 1 wird die zuvor schruppbearbeitete und gegebenenfalls einem Härtungsprozess unterzogene Kurbelwelle 23 wie folgt einem Feinbearbeitungsvorgang unterzogen, der zu einer einbaufertig maßhaltigen Kurbelwelle führt, die lediglich noch einem Superfinish zur Regulierung der gewünschten Oberflächenqualität unterzogen werden muss:
Die grob vorgearbeitete Kurbelwelle 23 ist mit einem Aufmaß, das in Figur 5 an dem Hauptlager 37 in stark überhöhter Form gestrichelt dargestellt ist, im Wesentlichen maßhaltig. Es kann eine gewisse, nicht veranschaulichte Exzentrizität oder auch eine Rundheitsabweichung aufweisen. Das durchschnittliche Aufmaß A liegt im Bereich von einigen wenigen Zehntel Millimetern. Wie aus Figur 2 ersichtlich, wird die zwischen den Spitzen 21, 22 aufgenommene Kurbelwelle 23 nun (sehr) langsam, z.B. mit einer Drehzahl von wenigen Umdrehungen/min um die Kurbelwellenachse 23 gedreht. Hingegen läuft die Spindel 18 mit dem Stirnfräser 31 mit einer Drehzahl von z. B. 4000 oder 5000 Umdrehungen/min oder mehr.

Das Hauptlager 37 der Kurbelwelle 23 wird mit dem Stirnfräser 31 in einer kurzen Bewegung in Z-Richtung in Eingriff gebracht und ohne weitere Z-Verstellung nun langsam um genau eine Umdrehung gedreht. Dabei wird die Drehung der Kurbelwelle 23 in dem Moment gestartet, zu dem der Stirnfräser 31 mit dem Hublager 37 in Eingriff kommt. Alternativ kann das Werkzeug 30 mit der bereits drehenden Kurbelwelle 23 in Eingriff gebracht werden. Dies vermeidet Formfehler durch unterschiedliche Belastungen auf die Kurbelwelle 23. Ist die Umdrehung vollzogen, wird die Kurbelwelle 23 noch drehend von dem Stirnfräser 31 wegbewegt. Es wird dabei darauf geachtet, dass der Fräser 31 den Umfang des Hublagers 37 ein ganzes Mal erreicht, aber nicht mehrmals umrundet. Damit wird das gesamte Aufmaß an einem einzigen Umlauf abgetragen. Die Lagerfläche des Hublagers 37 ist in einem einzigen Umlauf fertig bearbeitet. Dabei wird die Spindelachse 19, wie Figur 3 veranschaulicht, um einen geringen Achsversatz V gegen die Kurbelwellenachse 26 versetzt. Der Achsversatz V ist größer als der Abstand einer inneren Schneidecke 55 der Schneidkante 32 von der Spindelachse 19. Die Drehzahl des Stirnfräsers 31 ist so bemessen, dass an seiner inneren Schneidecke 55 bzw. der Stelle 56, bei der eine durch die Kurbelwellenachse 26 gehende Parallele 57 zur Spindelachse 19 die Schneidkante 32 schneidet, größer als 20 m/min vorzugsweise größer als 100m/min ist. Hingegen wird darauf gesehen, kann die Schnittgeschwindigkeit an der äußeren Schneidecke 58, 1000m/min oder mehr betragen. Der Spanabtrag erfolgt dabei in einer Ebene 34, die in Figur 6 nochmals veranschaulicht ist, um die geringe Größe des Aufmaßes A zu veranschaulichen. Bei der Bearbeitung entsteht eine zylindrische in Figur 4 veranschaulichte Lagerfläche an dem Hauptlager 37, die in Abhängigkeit von der Größe des Achsversatzes V eine in Figur 4 oben als Diagramm veranschaulichte, örtliche Abhängigkeit aufweist. Die Rauheit Ra ist in äußeren ringförmigen Bereichen 59, 60 gering, vorzugsweise sehr gering, d.h. kleiner als zwei bis ein Mikrometer. In einem mittleren ringförmigen Bereich 61 ist sie vorzugsweise etwas größer, z.B. größer als zwei oder auch größer als fünf Mikrometer. Diese Rauheitsverteilung ermöglicht an dem Hauptlager 37 höhere Traganteile, insbesondere in den Außenzonen.

Die Bearbeitung muss nicht zwangsläufig in einem einzigen Umlauf stattfinden. Sie kann wie Figur 5 veranschaulicht, insbesondere wenn das Aufmaß etwas größer ist, auch zunächst in einem ersten Umlauf durchgeführt werden, der dann z. B. auf ein Profil 62 führt. Dieses unrunde Profil kann sich aus in verschiedenen Radialrichtungen unterschiedlichen Steifigkeiten der Kurbelwelle 23 oder des Bearbeitungszentrums 1 ergeben. Anders als bei einem Schleifverfahren soll die Lagerfläche des Hauptlagers 37 nicht in mehreren Umläufen der Kurbelwelle 23 erzeugt werden. Vielmehr soll für den Umlauf eine Mindestspandicke nicht unterschritten werden. Entsprechend hoher Abtrag erfordert aber eine entsprechende in Radialrichtung auf die Kurbelwelle 23 einwirkende Kraft. Während beim Schleifen die Kraft gegen Ende des Schleifvorgangs auf fast Null reduziert werden kann, was "Ausfunken" genannt wird, ist dies bei der spanenden Bearbeitung mit geometrisch bestimmter Schneide so nicht möglich. Es kann deshalb passieren, dass in dem ersten Fräsvorgang das in Figur 5 veranschaulichte unrunde Profil 62 z.B. mit zwei oder mehreren deutlichen Maxima oder Minima erzeugt wird. Dieses Profil tritt in der betreffenden Kurbelwellenserie wegen der konstruktiv bedingten, unterschiedlichen radialen Steifigkeiten wiederholt immer wieder auf. In solchen Fällen wird dieses Profil 62 bestimmt. Dies kann während jeder Kurbelwellenbearbeitung, von Zeit zur Zeit stichprobenhaft nach vorgegebenen oder zufälligen Perioden oder auch lediglich während der Einarbeitung der Fräsmaschine ein für allemal für diesen Kurbelwellentyp geschehen. Ist das Profil 62 bestimmt, wird daraus eine Kompensationsbewegung errechnet, bei der in einem nachfolgenden, nochmaligen Fräsvorgang die auftretenden Unrundheiten durch eine geringe Zustellbewegung des Fräswerkzeugs 30 ausgeglichen werden. Es wird deshalb im zweiten Fräsdurchlauf, der wiederum lediglich eine einzige Umdrehung beinhaltet, das Sollprofil 63 erhalten. Die Zustellbewegung und die geringfügige elastische Ausweichbewegung der Kurbelwelle 23 führen zu einer exakt kreisförmigen resultierenden Bewegung der Schneideneingriffsstelle um die Mittelachse der Zylinderfläche.

Es ist auch möglich, das Sollprofil 63 in einem einzigen Durchlauf zu erzeugen, wenn die unterschiedlichen, während der Einarbeitung des Bearbeitungszentrum 1 und der speziellen Kurbelwellenserie ermittelten typischen Rundheitsabweichungen bekannt sind und kompensiert werden.

Die beschriebene Rundheitsabweichung kann als Welligkeit mit großer Wellenlänge (makroskopische Wellenlänge) angesehen werden. Die Wellenlänge ist z.B. ein ganzzahliger Bruchteil des Umfangs, wobei die ganze Zahl relativ klein, z.B. < 20 ist. Dagegen kann noch eine Welligkeit auftreten, die sich aus der Relativbewegung von Schneide und Werkstück ergibt und kinematische Welligkeit genannt werden kann. Deren Welligkeit ist vergleichsweise sehr gering. Sie ergibt sich aus dem Verhältnis der Umdrehungszahl der Kurbelwelle 23 und dem Umdrehungszahl des Fräswerkzeugs 30. Vorzugsweise ist die kinematische Wellenlänge so kurz, dass die entstehenden Wellentiefen geringer sind als die Rautiefen. Somit geht die kinematischen Wellenlänge gewissermaßen im "Rauschen" der Oberflächenrauheit unter.

Der beschriebene Bearbeitungsvorgang kann für alle Hauptlager 35 bis 39 in entsprechender Weise durchgeführt werden. Ebenso gilt dies für die Hublager 48 bis 51, wobei diese mit bewegter Kurbelwellenachse 26 und Spindelachse 19 durchgeführt werden. Dabei werden der Werkstückträger 5 und der Schlitten 16 mit einer Sinusschwingung und 90° Phasenversatz gegeneinander bewegt, sodass das jeweilige Hublager 48 bis 51 vertikal auf und ab bewegt wird und der Schlitten 16 dieser Bewegung folgt. Dabei wird der Achsversatz V möglicht konstant gehalten. Allerdings ist es auch möglich, diesen Achsversatz V sowohl bei den Hublagern 48 bis 51 als auch bei den Hauptlagern 35 bis 39 während einer Umdrehung der Kurbelwelle 23 zu variieren, um entlang des Umfangs des ringförmigen Bereichs 61 und eventuell auch der äußeren Bereiche 59, 61 unterschiedliche Rauheiten zu erzeugen. Auch könne bestimmte Formeffekte, wie Bombierungen, erzeugt oder vorbereitet werden, wenn diese dann auf Grund der unterschiedlichen erzeugten Traganteile bei dem Superfinish herausgearbeitet werden.

Die Kurbelwelle 23 erweist sich für die durchzuführenden Drehfräsbearbeitungen durchaus als recht steif - die Elastizität ist eher gering. Jedoch tritt gegebenenfalls auch die Elastizität des Bearbeitungszentrums in Erscheinung, die mit den oben genannten Maßnahmen berücksichtigt und ausgeglichen werden kann.

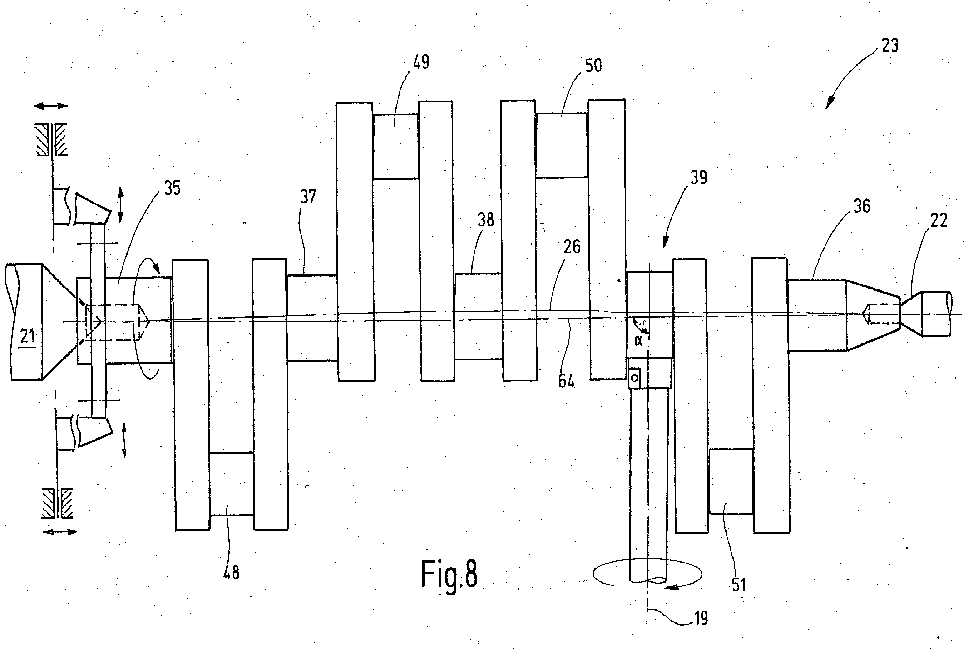

Wie Figur 8 veranschaulicht, kann die geringe Flexibilität der Kurbelwelle 23 dazu führen, dass sie eventuell auch trotz Abstützung mit der ebenfalls nicht unendlich steifen Lünetten dem Fräswerkzeug 30 ausweicht. Die Kurbelwellenachse 26 wird dadurch etwas gekrümmt und sie weicht von der idealen Verbindungslinie 64 ab, die die Spitzen 21, 22 miteinander verbindet. Dies kann dazu führen, dass insbesondere bei längeren Kurbelwellen seitliche Haupt- und Hublager nicht nur ausweichen, sondern auch in einen geringen spitzen Winkel zu der idealen Verbindungslinie 64 stehen. Um dennoch eine zylindrische Lagerfläche zu erzielen, kann, wie in Figur 8 veranschaulicht ist, die Spindelachse 19 in einem Winkel α zu der die Spitzen 21, 22 miteinander verbindenden Verbindungslinie 64 orientiert werden, der etwas geringer ist als 90°. Er ist vorzugsweise um denjenigen Winkel kleiner als 90°, den die Kurbelwellenachse 26 und die Verbindungslinie 64 an dem betrachteten Lager miteinander einschließen. In Figur 8 ist dies anhand des Hauptlagers 39 veranschaulicht. Die genaue Ausrichtung der Verbindungslinie 64 kann einmalig oder wiederholt vor der Bearbeitung mittels eines Messtasters ermittelt werden. Dazu kann eine Antastung von Referenzflächen an den Spitzen 21, 22 erfolgen. Liegt eine Schiefstellung der Verbindungslinie 62 vor, kann dies durch entsprechendes Verfahren der Schlitten 7 oder 8 ausgeglichen werden.

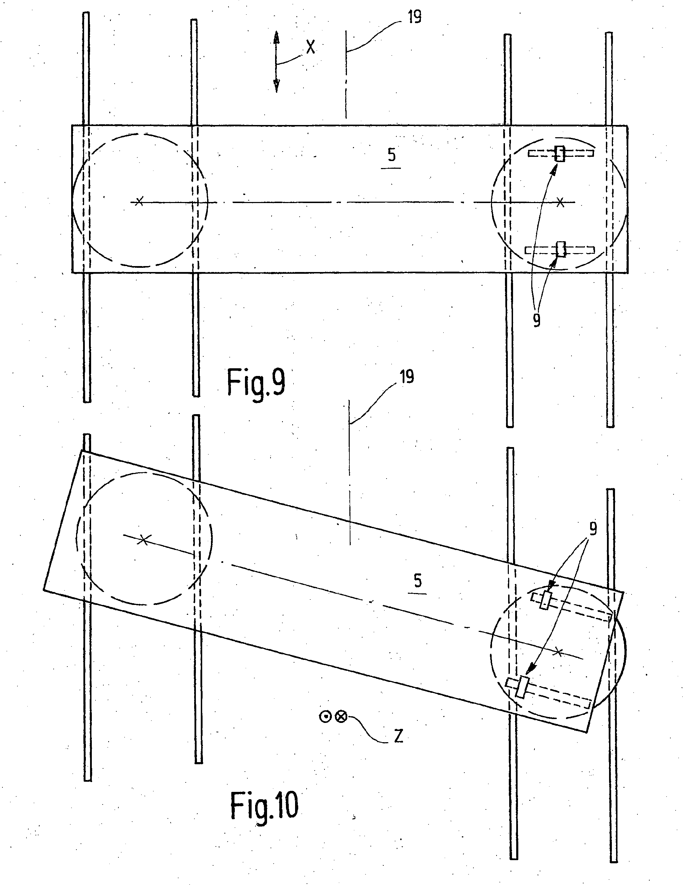

Die Schrägstellung der Kurbelwelle 23 kann durch unterschiedliche Ansteuerungen der Stellmotoren 10, 11 erfolgen. Dies ermöglicht, wie Figur 9 und 10 schematisch veranschaulichen, nicht nur eine Verstellung des Werkstückträgers 5 in z-Richtung, sondern (Figur 10) auch eine Verdrehung um eine senkrecht auf der Zeichenebene stehende Achse, die mit der y-Richtung übereinstimmt. Obwohl im vorliegenden Fall lediglich sehr geringe Wirikelkorrekturen von beispielsweise nur wenigen Winkelminuten oder -grad vorzunehmen sind, ist die Längenausgleichseinrichturig 9 so beschaffen, dass auch erhebliche Schrägstellungen der Kurbelwelle 23 erzielt werden können. Dies ist in Figur 10 angedeutet und ermöglicht beispielsweise das Anbringen von Schrägbohrungen oder die Bearbeitung schräger Sitzflächen, wie beispielsweise für Öhstopfen an der Kurbelwelle.

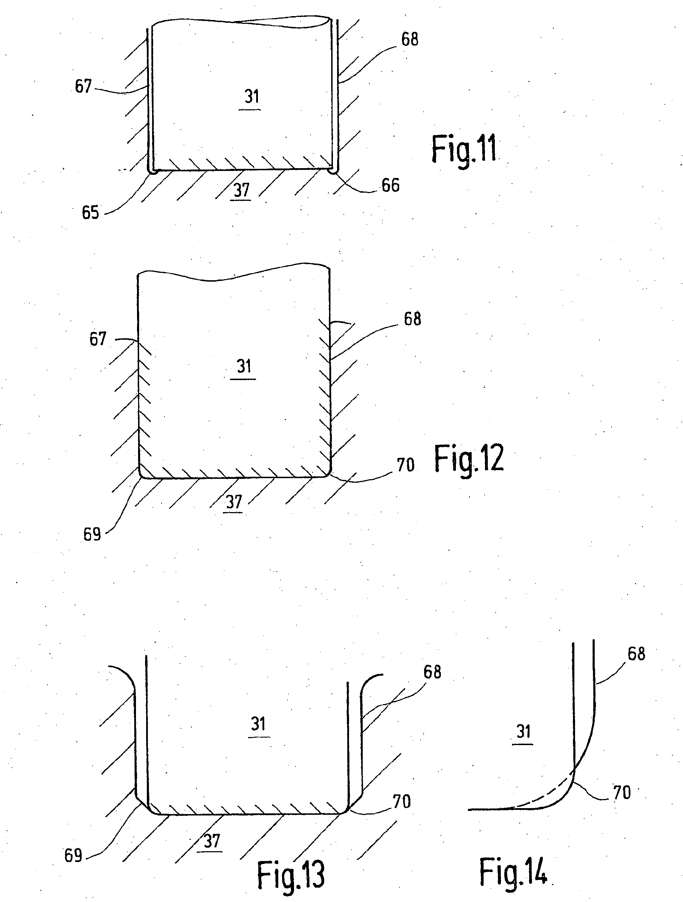

Das Fräswerkzeug 30 bearbeitet, wie erwähnt, die zylindrische Lagerfläche des jeweiligen Hauptlagers 35 - 39 oder Hublagers 48 bis 51 vorzugsweise jeweils auf gesamter Breite. Im Einzelnen ist dieses in den Figuren 11 bis 14 detaillierter veranschaulicht. Das Fräswerkzeug 30 bzw. der Stirnfräser 31 ist dort jeweils lediglich schematisch anhand seiner Kontur veranschaulicht. Als Beispiel zur Bearbeitung dient hier wiederum das Hauptlager 37, das ebenfalls lediglich schematisch im Schnitt veranschaulicht ist. Bei in Figur 11 veranschaulichten Kurbelwellen mit Freistichen 65, 66 endet die zylindrische Lagerfläche des Hauptlagers 37 vor den benachbarten, einander gegenüberliegenden ebenen Ölbundflächen 67, 68. Es erfolgt nur eine Bearbeitung der zylindrischen Lagerfläche des Hauptlagers 37, nicht aber zugleich eine Bearbeitung der Ölbundflächen 67, 68. Diese können jedoch in gleicher Aufspannung bedarfsweise mit dem gleichen Fräswerkzeug oder vorzugsweise auch mit anderen Fräswerkzeugen bearbeitet werden, die ähnlich wie der Stirnfräser 31 dann zwischen die Ölbundflächen 67, 68 gefahren werden und diese bearbeiten, ohne dann jedoch die zylindrische Lagerfläche zu berühren. Dies betrifft insbesondere PKW-Kurbelwellen.

Figur 12 veranschaulicht eine Fräsbearbeitung, wie sie bei Kurbelwellen ohne Freistiche 65, 66 zur Anwendung kommen kann. Die Ölbundflächen 67, 68 schließen unmittelbar an die zylindrische Lagerfläche des Hauptlagers 37 an. In der Bearbeitung erfolgt das Finish, d. h. die Feinbearbeitung sowohl der zylindrischen Lagerfläche als auch der anschließenden Eckradien 69, 70, wie auch der Ölbundflächen 67, 68. Dies kann beispielsweise bei Großkurbelwellen Anwendung finden.

Alternativ kann gemäß Figur 13 und 14 auch bei Großkurbelwellen lediglich die zylindrische Lagerfläche im Drehfräsverfahren bearbeitet werden. Die Eckradien 69, 70 werden, wie Figur 14 veranschaulicht, von der Schneidecke des Stirnfräsers 31 angeschnitten. Die Ölbundfläche 68 wird jedoch nicht berührt.

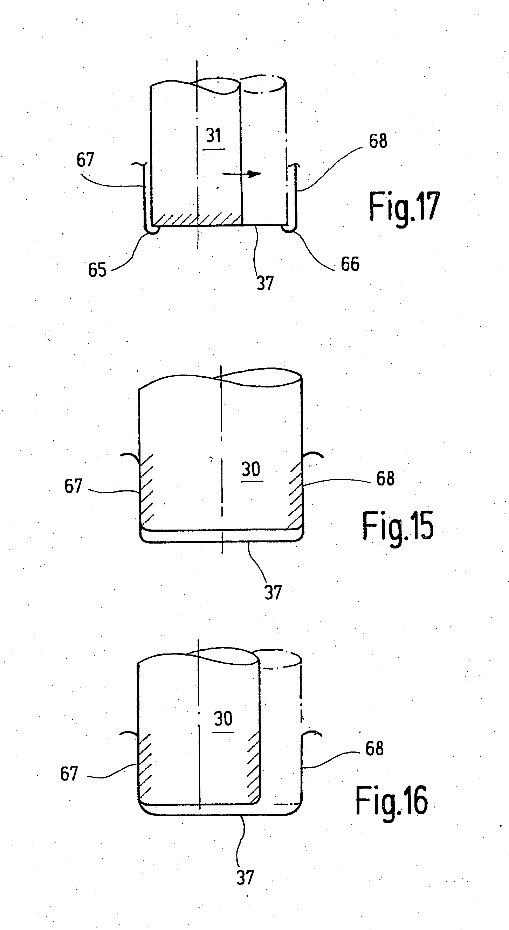

Figur 15 veranschaulicht eine weitere Möglichkeit der simultanen Bearbeitung beider Ölbundflächen 67, 68, die weitgehend der Variante nach Figur 12 entspricht. Jedoch ist das Fräswerkzeug 30 nur mit seinen Umfangsschneiden, nicht aber mit Stirnschneiden mit dem Hauptlager 37 oder der entsprechenden anderen zylindrischen Lagerfläche in Eingriff.

Figur 16 veranschaulicht eine weiter abgewandelte Version der Haupt- oder Hublagerfräsbearbeitung. Es wird ein Fräswerkzeug 30 verwendet, dessen Durchmesser kleiner ist als der Abstand der beiden Ölbundflächen 67, 68 voneinander. Diese werden nacheinander bearbeitet, wozu das Fräswerkzeug entsprechend seitlich verstellt wird (in Figur 16 angedeutet durch strichpunktierte Linien). Die beiden Ölbundflächen 67, 68 können mit unterschiedlichen Drehrichtungen der Kurbelwelle bearbeitet werden, so dass beide übereinstimmend und bevorzugterweise im Gleichlauf oder notfalls auch beide übereinstimmend im Gegenlauf bearbeitet werden. Der Gleichlauf wird bevorzugt, weil die Schneid gleich die maximale Spandicke abnimmt, was der Standzeit des Werkzeugs entgegen kommt.

Figur 17 veranschaulicht eine weiter abgewandelte Version der Haupt- oder Hublagerfräsbearbeitung in Anlehnung an das Verfahren gemäß Figur 11. Es wird ein Stirnfräser 31 verwendet, dessen Durchmesser kleiner ist als die axiale Länge der Zylinderfläche des Hauptlagers 37. Der Stirnfräser 31 wird während der Fräsbearbeitung seitlich verstellt (in Figur 17 angedeutet durch strichpunktierte Linien). Die Kurbelwelle 23 und der Stirnfräser 31 werden nach mindestens einer Umdrehung der Kurbelwelle 23 in Axialrichtung relativ zueinander bewegt, wodurch auf einer Schraubenlinie gefräst wird. Dieses Verfahren eignet sich zur Bearbeitung unterschiedlicher Lagerbreiten mit ein und demselben Fräswerkzeug 30. Dies reduziert die Werkzeugvielfalt.

In der bislang beschriebenen Bearbeitungsfolge wurden die Hauptlager 35 bis 39 und die Hublager 48 bis 51 bearbeitet. Bedarfsweise kann außerdem der äußere Flanschdurchmesser bearbeitet werden, insbesondere wenn das Spannfutter 28 nicht an dem Flansch 27 sondern an einer benachbarten Fläche 71 ansetzt (Alternative zu Figur 2). Damit sind die Haupt- und Hublager maßhaltig fertiggestellt. In der nun anschließenden zweiten Bearbeitungsfolge, die wiederum in einem Bearbeitungszentrum gemäß Figur 1 durchgeführt werden kann, wird die Kurbelwelle gemäß Figur 7 aufgenommen. Dazu weist das Bearbeitungszentrum z.B. einen Rundtisch auf, auf dem die Kurbelwelle 23 mit ihrer Längrichtung in Z-Richtung zu spannen ist. Außerdem kann die Kurbelwelle 23 um 180° gedreht werden, so dass sie wahlweise mit dem Flansch 27 oder mit dem Stummel 72 vor der Arbeitsspindel 18 steht. Es werden nun noch der Stummel 72, gegebenenfalls die Fläche 71 sowie die Stummelbohrung 25, die Nadellagerbohrung 23 und Flanschbohrungen 73, 74 (sowie wie weitere Flanschbohrungen) bearbeitet, die in Figur 7 lediglich anhand ihrer Mittellinien veranschaulicht sind. Die Kurbelwelle 23 wird dazu vorzugsweise mit ihrer Kurbelwellenachse 26 parallel zu der Spindelachse 19 gelagert. Außerdem können wie erwähnt Schrägbohrungen, wie Ölbohrungen und dergleichen, durch entsprechende Schrägstellungen des Werkstückträgers 5 angebracht werden. Die Bearbeitung der Außenfläche des Stummels 72 wird vorzugsweise mit einem einzahnigen Innenrand- oder Außenrundfräser erzielt, der auf einer Schraubenlinie in Bezug auf den Stummel 72 bewegt wird.

Mit der vorgestellten Bearbeitungsfolge gelingt es, den Schleifprozess aus der Kurbelwellenfertigung vollständig zu eliminieren. Die Feinbearbeitung wird vorzugsweise als Trockenbearbeitung als orthogonales Drehfräsen durchgeführt, wobei alle Hauptlager und Hublager in einer einzigen Aufspannung von den Schruppbearbeitungsmäßen ausgehend auf Endmaß bearbeitet werden. Für eine zweite Bearbeitungsfolge dienen einige der Haupt- und Hublager dann als Spannflächen, wodurch Maßketten vermieden werden. Kompensationsmaßnahmen zur Kompensation der Flexibilität der Kurbelwelle 23 stellen Maßhaltigkeit derselben, auch unter Großserienbedingungen sicher.

## Patentansprüche

1. Verfahren zur Feinbearbeitung von Wellen (23), die wenigstens ein erstes und ein letztes zentrisches Lager (35, 36), wenigstens ein exzentrisches Lager (48), ein erstes Ende (27) und ein gegenüberliegendes Ende (72) aufweisen,
mit einer ersten Bearbeitungsfolge, während derer die grob bearbeitete und gegebenenfalls gehärtete Welle (23) mit geometrisch bestimmter Schneide (32) in einer einzigen Aufspannung an ihren zentrischen Lagern (35, 36) und ihrem wenigstens einen exzentrischen Lager (48) spanend feinbearbeitet wird, **dadurch gekennzeichnet, daß** die Feinbearbeitung in der ersten Bearbeitungsfolge pro Lagerstelle jeweils mit höchstens zwei oder drei Umläufen der durch den Eingriff der bestimmten Schneide (32) und der Welle (23) definierten Zerspanungsstelle um die Welle (23) erfolgt,
und durch eine zweite Bearbeitungsfolge, während derer die an zentrischen Lagern (35, 36) und exzentrischen Lagern (48) feinbearbeitete Welle (23) mit geometrisch bestimmter Schneide (32) in einer einzigen Aufspannung an ihren Enden (27, 72) spanend feinbearbeitet wird.

2. Verfahren nach Anspruch 1, **dadurch gekennzeichnet, dass** die erste Bearbeitungsfolge in einem ersten Bearbeitungszentrum (1) und die zweite Bearbeitungsfolge in einem zweiten Bearbeitungszentrum (1) ausgeführt wird.

3. Verfahren nach Anspruch 1, **dadurch gekennzeichnet, dass** die erste Bearbeitungsfolge und die zweite Bearbeitungsfolge in ein und demselben Bearbeitungszentrum (1) ausgeführt werden.

4. Verfahren nach Anspruch 1, **dadurch gekennzeichnet, dass** in dem Feinbearbeitungsvorgang mit einer mittleren Schnittgeschwindigkeit von mindestens 300 m/min bis 400 m/min gearbeitet wird.

5. Verfahren nach Anspruch 1, **dadurch gekennzeichnet, dass** während der Feinbearbeitung nach einem Umlauf eine Messung der Welle (23) vorgenommen wird.

6. Verfahren nach Anspruch 5, **dadurch gekennzeichnet, dass** die Messung zwischen zwei Umläufen vorgenommen wird.

7. Verfahren nach Anspruch 1, **dadurch gekennzeichnet, dass** nach der Feinbearbeitung der Welle (23) eine Messung durchgeführt wird.

8. Verfahren nach eine der Ansprüche 5 bis 7, **dadurch gekennzeichnet, dass** die Messung an der in dem Bearbeitungszentrum aufgespannten Welle (23) durchgeführt wird.

9. Verfahren nach Anspruch 8, **dadurch gekennzeichnet, dass** die Messung mittels eines Messeinsatzes durchgeführt wird, der in die Arbeitsspindel (18) der Werkzeugmaschine eingewechselt wird.

10. Verfahren nach Anspruch 9, **dadurch gekennzeichnet, dass** der Messeinsatz mittels eines Werkzeugwechslers eingewechselt wird.

11. Verfahren nach einem der Ansprüche 5 bis 10, **dadurch gekennzeichnet, dass** bei der Messung Rundheitsabweichungen der bearbeiteten Zylinderfläche des zentrischen Lagers (35) und/oder des exzentrischen Lagers (48) bestimmt werden.

12. Verfahren nach Anspruch 11, **dadurch gekennzeichnet, dass** der Erwartungswert der Rundheitsabweichungen bestimmt wird.

13. Verfahren nach einem der Ansprüche 5 bis 10, **dadurch gekennzeichnet, dass** die Messung an jeder Welle (23) durchgeführt werden.

14. Verfahren nach einem der Ansprüche 5 bis 10, **dadurch gekennzeichnet, dass** die Messung lediglich stichprobenartig nach jeweils einer Anzahl von Feinbearbeitungsvorgängen durchgeführt wird.

15. Verfahren nach Anspruch 12, **dadurch gekennzeichnet, dass** zwischen der Welle (23) und der Arbeitsspindel (18) eine der erwarteten Formabweichung, insbesondere Rundheitsabweichung entgegen gerichtete Nachstellbewegung erzeugt wird.

16. Verfahren nach Anspruch 1, **dadurch gekennzeichnet, dass** die Feinbearbeitung in der ersten Bearbeitungsfolge auf der gesamten Länge der jeweiligen zylindrischen Fläche des Lagers (35, 48) gleichzeitig durchgeführt wird.

17. Verfahren nach Anspruch 1, **dadurch gekennzeichnet, dass** die Feinbearbeitung in der ersten und/oder der zweiten Bearbeitungsfolge jeweils ohne Zustellbewegung zwischen dem Werkzeug (30) mit bestimmter Schneide und der Welle (23) durchgeführt wird.

18. Verfahren nach Anspruch 1 oder 5, **dadurch gekennzeichnet, dass** die Feinbearbeitung in der ersten und/oder der zweiten Bearbeitungsfolge jeweils mit einem in Lagerumfangsrichtung zu messenden Vorschub pro Zahn von höchstens 0,5 mm, vorzugsweise höchstens 0,2 mm, insbesondere lediglich 0,1 mm durchgeführt wird.

19. Verfahren nach Anspruch 1, **dadurch gekennzeichnet, dass** die Feinbearbeitung in der ersten und/oder der zweiten Bearbeitungsfolge in vorzugsweise lediglich einer Wellenumdrehung, höchstens zwei bis drei Wellenumdrehungen jeweils bis zu einer maximalen Rundheitsabweichung von 60 µm, vorzugsweise 30 µm durchgeführt wird.

20. Verfahren nach Anspruch 1, **dadurch gekennzeichnet, dass** die Feinbearbeitung in der ersten und/oder der zweiten Bearbeitungsfolge jeweils bis zu einer maximalen Durchmesserabweichung von 100 µm, vorzugsweise bis zu einer maximalen Durchmesserabweichung von 50 µm als positive Abweichung bezogen auf die Sollkontur nach dem Finishen durchgeführt wird.

21. Verfahren nach Anspruch 1, **dadurch gekennzeichnet, dass** mit der Feinbearbeitung in der ersten und/oder der zweiten Bearbeitungsfolge in vorzugsweise lediglich einer Wellenumdrehung, höchstens zwei bis drei Wellenumdrehungen eine durchschnittliche Rauheit (Ra) von weniger als 5 µm, insbesondere weniger als 2 µm erzeugt wird.

22. Verfahren nach Anspruch 1, **dadurch gekennzeichnet, dass** in der ersten Bearbeitungsfolge an den zentrischen Lagern (35, 36) und/oder den exzentrischen Lagern (48) in einem mittleren ringförmigen Bereich (61) jeweils eine Rauheit (Ra) erzeugt wird, die von der in randnahen Bereichen erzeugten Rauheit verschieden ist.

23. Verfahren nach Anspruch 1 oder 22 **dadurch gekennzeichnet, dass** die Welle eine Nockenwelle, bei der das exzentrische Lager durch die Außenumfangsfläche des Nockens gebildet ist, oder eine Kurbelwelle (23) ist, bei der die zentrischen Lager (35, 36) Hauptlager (35, 36), das wenigstens eine exzentrische Lager (48) ein Hublager (48) und die Enden (27, 72) ein Flansch (27) mit Bohrungen (73, 74) und ein Stummel (72) sind.

24. Verfahren nach Anspruch 1 oder 22, **dadurch gekennzeichnet, dass** die Rauheit (Ra) in den randnahen Bereichen (59, 60) wenigstens doppelt so groß, insbesondere mindestens fünf mal so groß ist, wie in dem mittleren ringförmigen Bereich (61).

25. Verfahren nach Anspruch 1 oder 22, **dadurch gekennzeichnet, dass** die Rauheit (Ra) in dem mittleren ringförmigen Bereich (61) wenigstens doppelt so groß, insbesondere mindestens fünf mal so groß ist, wie in den randnahen Bereichen (59, 60).

26. Verfahren nach Anspruch 25, **dadurch gekennzeichnet, dass** der Rauheitsunterschied zwischen dem mittleren ringförmigen Bereich (61) und den äußeren Bereichen (59, 60) so groß ist, dass nach dem Feinschlichten ein Rauheitsunterschied vorhanden bleibt.

27. Verfahren nach Anspruch 1 oder 22, **dadurch gekennzeichnet, dass** die Rauheit (Ra) in dem mittleren ringförmigen Bereich (61) größer als 2 µm, vorzugsweise größer als 5µm ist.

28. Verfahren nach Anspruch 1 oder 22, **dadurch gekennzeichnet, dass** die Rauheit (Ra) außerhalb des mittleren ringförmigen Bereichs (61) geringer als 5µm, vorzugsweise geringer als 2 µm, insbesondere geringer als 1 µm ist.

29. Verfahren nach Anspruch 1 oder 22, **dadurch gekennzeichnet, dass** die Feinbearbeitung in der ersten und/oder der zweiten Bearbeitungsfolge jeweils mit im Wesentlichen in einer Ebene geführten Schneiden (32, 33) erfolgt.

30. Verfahren nach Anspruch 1 oder 22, **dadurch gekennzeichnet, dass** bei der Feinbearbeitung in der ersten und/oder der zweiten Bearbeitungsfolge an dem Umfang jeder bearbeiteten Zylinderfläche jeweils wenigstens 1000, vorzugsweise mindestens 2000 Facetten erzeugt werden.

31. Verfahren nach Anspruch 1 oder 22, **dadurch gekennzeichnet, dass** mit der Feinbearbeitung in der ersten und/oder der zweiten Bearbeitungsfolge jeweils eine Welligkeit von weniger als 1 µm, vorzugsweise weniger als 0,5 µm, insbesondere weniger als 0,15 µm erzeugt wird.

32. Verfahren nach Anspruch 1 oder 22, **dadurch gekennzeichnet, dass** mit der Feinbearbeitung in der ersten Bearbeitungsfolge die zylindrischen Flächen der zentrischen Lager (35, 36) und der exzentrischen Lager (48) mit einer Winkelabweichung von kleiner als 0,5°, insbesondere kleiner als 0,2° vorzugsweise kleiner als 0,1° erzeugt werden.

33. Verfahren nach Anspruch 1 oder 22, **dadurch gekennzeichnet, dass** mit der Feinbearbeitung in der ersten Bearbeitungsfolge die zylindrischen Flächen der zentrischen Lager (35, 36) und der exzentrischen Lager (48) mit einer Formabweichung von weniger als 0,4%, insbesondere weniger als 0,2%, insbesondere weniger als 0,1% des Sollhubes erzeugt wird.

34. Verfahren nach Anspruch 1 oder 22, **dadurch gekennzeichnet, dass** die Flächen der zentrischen Lager (35, 36) und der exzentrischen Lager (48), wenn diese eine Bombierung aufweisen sollen, mit der Feinbearbeitung in der ersten Bearbeitungsfolge zunächst im Rahmen der Bearbeitungsgenauigkeit zylindrisch erzeugt werden und dass die Bombierung in dem nachfolgenden Finishing erzeugt wird.

35. Verfahren nach Anspruch 1 oder 22, dadurch gekenhzeichnet, dass die Feinbearbeitung durch Drehfräsen mittels eines Fräswerkzeugs (30) erfolgt, dessen wenigstens eine Stirnschneide in einer zu seiner Drehachse (19) orthogonalen Ebene (34) angeordnet ist.

36. Verfahren nach Anspruch 1 oder 22, **dadurch gekennzeichnet, dass** die Feinbearbeitung durch Drehfräsen mittels eines Fräswerkzeugs (30) erfolgt, dessen wenigstens eine Stirnschneide (32) auf einer zu seiner Drehachse konzentrischen Kegelfläche angeordnet ist.

37. Verfahren nach Anspruch 36, **dadurch gekennzeichnet, dass** der Kegelwinkel größer als 170°, vorzugsweise größer als 175° ist.

38. Verfahren nach Anspruch 1 oder 22, **dadurch gekennzeichnet, dass** die Feinbearbeitung durch orthogonales Drehfräsen erfolgt, wobei die Drehachse (19) des Fräswerkzeugs (30) rechtwinklig zu der Drehachse (26) der Welle (23) orientiert ist.

39. Verfahren nach Anspruch 1 oder 22, **dadurch gekennzeichnet, dass** die Feinbearbeitung durch orthogonales Drehfräsen erfolgt, wobei die Drehachse (19) des Fräswerkzeugs (30) rechtwinklig zu der Drehachse der Welle (23) orientiert, dabei aber gegen diese um einen Achsversatz (V) versetzt ist.

40. Verfahren nach Anspruch 39, **dadurch gekennzeichnet, dass** der Achsversatz (V) zur Erzielung eines gewünschten Rauheitsunterschiedes zwischen einem mittleren Bereich des exzentrischen Lagers (48) und äußeren Bereichen eingestellt wird.

41. Verfahren nach Anspruch 1 oder 22, **dadurch gekennzeichnet, dass** das Fräswerkzeug (32) wenigstens zwei Schneidkanten (32, 33) aufweist, die in einer gemeinsamen, zu der Drehachse (19) des Fräswerkzeugs (30) orthogonalen Ebene (34) liegen.

42. Verfahren nach Anspruch 1 oder 22, **dadurch gekennzeichnet, dass** das Fräswerkzeug (30) wenigstens mit einer Drehzahl angetrieben wirt, die zu der Drehzahl der Kurbelwelle (23) in einem Verhältnis von mindestens 500:1 steht.

43. Verfahren nach Anspruch 1 oder 22, **dadurch gekennzeichnet, dass** die Welle (23) während der ersten Bearbeitungsfolge an stirnseitigen Ausnehmungen (23, 25) zwischen zwei Spitzen (21, 22) aufgenommen wird, die auf einer gemeinsamen Geraden (64) liegen.

44. Verfahren nach Anspruch 39 und 43, **dadurch gekennzeichnet, dass** die Gerade (64) zur Bearbeitung der zentrischen Lager (48) und exzentrischen Lager (35, 36) rechtwinklig zu der Drehachse (19) des Fräswerkzeugs (30) gerichtet wird.

45. Verfahren nach Anspruch 39 und 43, **dadurch gekennzeichnet, dass** die Gerade (64) zur Bearbeitung der zentrischen Lager (48) und exzentrischen Lager (35, 36) in einem die elastische Durchbiegung der Welle (23) während der Fräsbearbeitung kompensierenden Winkel zu der Drehachse (19) des Fräswerkzeugs (30) gerichtet wird.

46. Verfahren nach Anspruch 45, **dadurch gekennzeichnet, dass** der Winkel (α) während der einen oder der wenigen Umdrehungen der Welle (23) an eine der jeweiligen Drehstellung der Welle (23) zugeordnete Elastizität angepasst wird.

47. Verfahren nach Anspruch 1 oder 22, **dadurch gekennzeichnet, dass** die Welle (23) während der ersten und der zweiten Bearbeitungsfolge jeweils zentrisch gespannt wird.

48. Verfahren nach Anspruch 47, **dadurch gekennzeichnet, dass** bei der Bearbeitung der exzentrischen Lager (35, 36) der Welle (23) die Arbeitsspindel (18) eine vertikale Folgebewegung und die Welle (23) eine horizontale Ausgleichsbewegung ausführen, die so aufeinander abgestimmt sind, dass sie die jeweils gewünschte Flächenform ergeben.

49. Verfahren nach Anspruch 48, **dadurch gekennzeichnet, dass** die vertikale Folgebewegung und die horizontale Ausgleichsbewegung jeweils einer Sinus- bzw. Kösinusschwingung folgen und sich zu einer Kreisbewegung überlagern.

50. Verfahren nach Anspruch 1, 5 oder 23, **dadurch gekennzeichnet, dass** zum Ausgleich von Temperatureinflüssen eine Spindelwachstumskompensation vorgenommen wird.

51. Verfahren nach Anspruch 1 oder 22, **dadurch gekennzeichnet, dass** sowohl die erste als auch die zweite Bearbeitungsfolge vollständig als Trockenbearbeitung ausgeführt werden.

52. Verfahren nach Anspruch 1 oder 22, **dadurch gekennzeichnet, dass** die Drehzahl des Fräswerkzeuges (30) oberhalb der Eigenfrequenz der Kurbelwelle oder anregbarer Oberwellen festgelegt wird.

## Claims

1. Method for the precision machining of shafts (23), which have at least one first and one last centric bearing (35, 36), at least one excentric bearing (48), a first end (27) and an opposing end (72),
with a first machining sequence, during which the roughly machined and possibly hardened shaft (23) is precision cut with geometrically defined cutting edge (32) in a single mounting at its centric bearings (35, 36) and its at least one excentric bearing (48), **characterised in that** in the first machining sequence for each bearing location the precision machining is respectively conducted with at most two or three rotations of the cutting location around the shaft (23) defined by the engagement of the specific cutting edge (32) and the shaft (23),
and by a second machining sequence, during which the shaft (23) precision machined at centric bearings (35, 36) and excentric bearings (48) is precision cut at its ends (27, 72) with geometrically defined cutting edge (32) in a single mounting.

2. Method according to claim 1, **characterised in that** the first machining sequence is conducted in a first machining centre (1) and the second machining sequence is conducted in a second machining centre (1).

3. Method according to claim 1, **characterised in that** the first machining sequence and the second machining sequence are conducted in one and the same machining centre (1).

4. Method according to claim 1, **characterised in that** in the precision machining process work is conducted at an average cutting speed of at least 300 m/min to 400 m/min.

5. Method according to claim 1, **characterised in that** during the precision machining a measurement of the shaft (23) is conducted after one rotation.

6. Method according to claim 5, **characterised in that** the measurement is conducted between two rotations.

7. Method according to claim 1, **characterised in that** a measurement is conducted after the precision machining of the shaft (23).

8. Method according to one of claims 5 to 7, **characterised in that** the measurement is conducted on the shaft (23) mounted in the machining centre.

9. Method according to claim 8, **characterised in that** the measurement is conducted by means of a measurement insert, which is inserted into the work spindle (18) of the machine tool.

10. Method according to claim 9, **characterised in that** the measurement insert is inserted by means of a tool changer.

11. Method according to one of claims 5 to 10, **characterised in that** deviations in roundness of the machined cylinder face of the centric bearing (35) and/or the excentric bearing (48) are determined during the measurement.

12. Method according to claim 11, **characterised in that** the expected value of the roundness deviations is determined.

13. Method according to one of claims 5 to 10, **characterised in that** the measurement is conducted on each shaft (23).

14. Method according to one of claims 5 to 10, **characterised in that** the measurement is only conducted on a sampling basis respectively after a number of precision machining processes.

15. Method according to claim 12, **characterised in that** an adjustment movement opposed to the expected shape deviation, in particular roundness deviation, is generated between the shaft (23) and the work spindle (18).

16. Method according to claim 1, **characterised in that** the precision machining in the first machining sequence is conducted at the same time on the entire length of the respective cylindrical face of the bearing (35, 48).

17. Method according to claim 1, **characterised in that** the precision machining in the first and/or the second machining sequence is respectively conducted without feed motion between the tool (30) with specific cutting edge and the shaft (23).

18. Method according to claim 1 or 5, **characterised in that** the precision machining in the first and/or the second machining sequence is respectively conducted with a feed to be measured in bearing circumferential direction for each tooth of at most 0.5 mm, preferably at most 0.2 mm, in particularly only 0.1 mm.

19. Method according to claim 1, **characterised in that** the precision machining in the first and/or the second machining sequence is conducted in preferably only one shaft rotation, at most two to three shaft rotations, respectively to a maximum roundness deviation of 60 µm, preferably 30 µm.

20. Method according to claim 1, **characterised in that** the precision machining in the first and/or the second machining sequence is respectively conducted to a maximum deviation in diameter of 100 µm, preferably to a maximum deviation in diameter of 50 µm, as positive deviation in relation to the desired contour after the finishing operation.

21. Method according to claim 1, **characterised in that** an average roughness (Ra) of at less than 5 µm, in particular less than 2 µm, is generated with the precision machining in the first and/or the second machining sequence in preferably only one shaft rotation, at most two to three shaft rotations.

22. Method according to claim 1, **characterised in that** in the first machining sequence on the centric bearings (35, 36) and/or the excentric bearings (48) a roughness (Ra) is respectively generated in a central ring-shaped region (61), which is different from the roughness generated in the regions close to the edge.

23. Method according to claim 1 or 22, **characterised in that** the shaft is a cam shaft, in which the excentric bearing is formed by the outer peripheral face of the cam, or a crankshaft (23), in which the centric bearings (35, 36) are main bearing (35, 36), which ? at least one excentric bearing (48), a rod bearing (48) and the ends (27, 72) ? a flange (27) with bores (73, 74) and a stump (72).?

24. Method according to claim 1 or 22, **characterised in that** the roughness (Ra) in the regions (59, 60) close to the edge is at least double the size, in particular at least five-times the size, of that in the central ring-shaped region (61).

25. Method according to claim 1 or 22, **characterised in that** the roughness (Ra) in the central ring-shaped region (61) is at least double the size, in particular t least five-times the size, of that in the regions (59, 60) close to the edge.

26. Method according to claim 25, **characterised in that** the difference in roughness between the central ring-shaped region (61) and the outer regions (59, 60) is so great that there remains a roughness difference after the finish smoothing.

27. Method according to claim 1 or 22, **characterised in that** the roughness (Ra) in the central ring-shaped region (61) is more than 2 µm, preferably more than 5 µm.

28. Method according to claim 1 or 22, **characterised in that** the roughness (Ra) outside the central ring-shaped region (61) is less than 5 µm, preferably less than 2 µm, in particular less than 1 µm.

29. Method according to claim 1 or 22, **characterised in that** the precision machining in the first and/or second machining sequence is respectively conducted with cutting edges (32, 33) guided substantially in one plane.

30. Method according to claim 1 or 22, **characterised in that** in the precision machining in the first and/or second machining sequence at least 1000, preferably at least 2000, bevels are respectively produced on the circumference of each machined cylinder face.

31. Method according to claim 1 or 22, **characterised in that** with the precision machining in the first and/or second machining sequence a corrugation of less than 1 µm, preferably less than 0.5 µm, in particular less than 0.15 µm, is respectively generated.

32. Method according to claim 1 or 22, **characterised in that** the cylindrical faces of the centric bearings (35, 36) and the excentric bearings (48) are produced with an angle deviation of less than 0.5°, in particular less than 0.2°, preferably less than 0.1 °, with the precision machining in the first machining sequence.

33. Method according to claim 1 or 22, **characterised in that** the cylindrical faces of the centric bearings (35, 36) and the excentric bearings (48) are produced with a shape deviation of less than 0.4%, in particular less than 0.2%, preferably less than 0.1%, with the precision machining in the first machining sequence.

34. Method according to claim 1 or 22, **characterised in that** if the faces of the centric bearings (35, 36) and the excentric bearings (48) are to have a curvature, these are firstly produced in cylindrical shape as part of the machining precision with the precision machining in the first machining sequence, and that the curvature is generated in the subsequent finishing operation.

35. Method according to claim 1 or 22, **characterised in that** the precision machining is conducted by rotary milling by means of a milling cutter (30), at least one front cutting edge of which is arranged in a plane (34) orthogonal to its rotational axis (19).

36. Method according to claim 1 or 22, **characterised in that** the precision machining is conducted by rotary milling by means of a milling cutter (30), at least one front cutting edge (32) of which is arranged on a conical surface concentric to its rotational axis.

37. Method according to claim 36, **characterised in that** the cone angle is greater than 170°, preferably greater than 175°.

38. Method according to claim 1 or 22, **characterised in that** the precision machining is conducted by orthogonal rotary milling, wherein the rotational axis (19) of the milling cutter (30) is orientated at right angles to the rotational axis (26) of the shaft (23).

39. Method according to claim 1 or 22, **characterised in that** the precision machining is conducted by orthogonal rotary milling, wherein the rotational axis (19) of the milling cutter (30) is orientated at right angles to the rotational axis of the shaft (23), but in this case is displaced in relation to this by an axial offset (V).

40. Method according to claim 39, **characterised in that** the axial offset (V) is adjusted to obtain a desired roughness difference between a central region of the excentric bearing (48) and outer regions.

41. Method according to claim 1 or 22, **characterised in that** the milling cutter (32) has at least two cutting edges (32, 33), which lie in a common plane (34) orthogonal to the rotational axis (19) of the milling cutter (30).

42. Method according to claim 1 or 22, **characterised in that** the milling cutter (30) is driven at least at a rotational speed that is in a ratio of at least 500:1 in relation to the rotational speed of the crankshaft (23).

43. Method according to claim 1 or 22, **characterised in that** during the first machining sequence the shaft (23) is taken up at recesses (23, 25) on the front side between two points (21, 22), which lie on a common straight line (64).

44. Method according to claim 39 and 43, **characterised in that** for machining the centric bearings (48) and excentric bearings (35, 36) the straight line (64) is directed at right angles to the rotational axis (19) of the milling cutter (30).

45. Method according to claim 39 and 43, **characterised in that** for machining the centric bearings (48) and excentric bearings (35,36) the straight line (64) is directed at an angle to the rotational axis (19) of the milling cutter (30) that compensates the elastic deflection of the shaft (23) during the milling operation.

46. Method according to claim 45, **characterised in that** during the one or the few rotations of the shaft (23) the angle (α) is adapted to an elasticity associated with the respective rotational position of the shaft (23).

47. Method according to claim 1 or 22, **characterised in that** the shaft (23) is respectively clamped centrically during the first and the second machining sequence.

48. Method according to claim 47, **characterised in that** during the machining of the excentric bearings (35, 36) of the shaft (23) the work spindle (18) performs a vertical follower movement and the shaft (23) performs a horizontal compensating movement, which movements are coordinated to one another such that they result in the respectively desired surface shape.

49. Method according to claim 48, **characterised in that** the vertical follower movement and the horizontal compensating movement respectively follow a sinusoidal or cosine oscillation and are superposed into a circular movement.

50. Method according to claim 1, 5 or 23, **characterised in that** a spindle growth compensation is conducted to compensate effects of temperature.

51. Method according to claim 1 or 22, **characterised in that** both the first and the second machining sequences are conducted fully as dry machining operations.

52. Method according to claim 1 or 22, **characterised in that** the rotational speed of the milling cutter (30) is fixed above the natural frequency of the crankshaft or excitable harmonics.

## Revendications

1. Procédé d'usinage de précision d'arbres (23) qui présentent au moins un premier et un dernier palier centré (35, 36), au moins un palier excentré (48), une première extrémité (27) et une extrémité (72) opposée,
comprenant une première séquence d'usinage au cours de laquelle l'arbre (23) dégrossi et éventuellement trempé est soumis à un usinage de précision par enlèvement de matière avec un tranchant (32) géométriquement déterminé, dans un montage unique, sur ses paliers centrés (35; 36) et son palier excentré (48), au nombre d'au moins un, **caractérisé en ce que** l'usinage de précision est effectué, lors de la première séquence d'usinage, pour chaque point d'appui respectivement avec au maximum deux ou trois rotations du point d'enlèvement de matière, défini par la prise entre le tranchant (32) déterminé et l'arbre (23), autour d' l'arbre (23),
et **en ce qu'**il comporte une deuxième séquence d'usinage au cours de laquelle l'arbre (23), qui a subi un usinage de précision sur les paliers centrés (35, 36) et les paliers excentrés (48), est soumis à un usinage de précision par enlèvement de matière avec un tranchant (32) géométriquement déterminé, dans un montage unique à ses extrémités (27, 72).

2. Procédé selon la revendication 1, **caractérisé en ce que** la première séquence d'usinage est exécutée dans un premier centre d'usinage (1) et la deuxième séquence d'usinage est exécutée dans un deuxième centre d'usinage (1).

3. Procédé selon la revendication 1, **caractérisé en ce que** la première séquence d'usinage et la deuxième séquence d'usinage sont exécutées dans un même centre d'usinage (1).

4. Procédé selon la revendication 1, **caractérisé en ce que** lors de l'opération d'usinage de précision, on travaille à une vitesse de coupe moyenne d'au moins 300 m/min jusqu'à 400 m/min.

5. Procédé selon la revendication 1, **caractérisé en ce qu'**au cours de l'usinage de précision, on procède à une mesure de l'arbre (23) après une rotation.

6. Procédé selon la revendication 5, **caractérisé en ce que** la mesure est effectuée entre deux rotations.

7. Procédé selon la revendication 1, **caractérisé en ce que** l'on procède à une mesure après l'usinage de précision de l'arbre (23).

8. Procédé selon l'une des revendications 5 à 7, **caractérisé en ce que** la mesure est effectuée sur l'arbre (23) monté dans le centre d'usinage.

9. Procédé selon la revendication 8, **caractérisé en ce que** la mesure est effectuée à l'aide d'un cadre de mesure qui est mis en place dans la broche d'usinage (18) de la machine-outil.

10. Procédé selon la revendication 9, **caractérisé en ce que** le cadre de mesure est mis en place à l'aide d'un dispositif de changement d'outil.

11. Procédé selon l'une des revendications 5 à 10, **caractérisé en ce que** lors de la mesure, on détermine des écarts de circularité de la surface cylindrique usinée du palier centré (35) et/ou du palier excentré (48).

12. Procédé selon la revendication 11, **caractérisé en ce que** la valeur attendue des écarts de circularité est déterminée.

13. Procédé selon l'une des revendications 5 à 10, **caractérisé en ce que** la mesure est effectuée sur chaque arbre (23).

14. Procédé selon l'une des revendications 5 à 10, **caractérisé en ce que** la mesure est effectuée seulement par échantillonnage, chaque fois après un certain nombre d'opérations d'usinage de précision.

15. Procédé selon la revendication 12, **caractérisé en ce que** l'on génère, entre l'arbre (23) et la broche d'usinage (18), un mouvement d'ajustage qui est opposé à l'écart de forme attendu, notamment à l'écart de circularité.

16. Procédé selon la revendication 1, **caractérisé en ce que** lors de la première séquence d'usinage, l'usinage de précision est effectué simultanément sur toute la longueur de la surface cylindrique respective du palier (35, 48).

17. Procédé selon la revendication 1, **caractérisé en ce que** lors de la première et/ou de la deuxième séquence d'usinage, l'usinage de précision est effectué respectivement sans mouvement d'avance entre l'outil (30), doté du tranchant déterminé, et l'arbre (23).

18. Procédé selon la revendication 1 ou 5, **caractérisé en ce que** lors de la première et/ou de la deuxième séquence d'usinage, l'usinage de précision est effectué respectivement avec une avance par dent, à mesurer dans la direction circonférentielle du palier, qui est au maximum de 0,5 mm, de préférence au maximum de 0,2 mm et notamment de seulement 0,1 mm.

19. Procédé selon la revendication 1, **caractérisé en ce que** lors de la première et/ou de la deuxième séquence d'usinage, l'usinage de précision est effectué de préférence au cours d'une seule rotation de l'arbre, au maximum de deux à trois rotations de l'arbre, respectivement jusqu'à un écart de circularité maximal de 60 µm, de préférence de 30 µm.

20. Procédé selon la revendication 1, **caractérisé en ce que** lors de la première et/ou de la deuxième séquence d'usinage, l'usinage de précision est effectué respectivement jusqu'à un écart de diamètre maximal de 100 µm, de préférence jusqu'à un écart de diamètre maximal de 50 µm en tant qu'écart positif par rapport au contour de consigne après le finissage.

21. Procédé selon la revendication 1, **caractérisé en ce que** lors de la première et/ou de la deuxième séquence d'usinage, on réalise avec l'usinage de précision, de préférence au cours d'une seule rotation de l'arbre, au maximum de deux à trois rotations de l'arbre, une rugosité (Ra) moyenne de moins de 5 µm, notamment de moins de 2 µm.

22. Procédé selon la revendication 1, **caractérisé en ce que** lors de la première séquence d'usinage, on réalise sur les paliers centrés (35, 36) et/ou les paliers excentrés (48), dans une zone (61) annulaire médiane, respectivement une rugosité (Ra) qui est différente de la rugosité créée dans des zones proches des bords.

23. Procédé selon la revendication 1 ou 22, **caractérisé en ce que** l'arbre est un arbre à came, dont le palier excentré est formé par la surface périphérique extérieure de la came, ou un vilebrequin (23) dont les paliers centrés (35, 36) sont des paliers principaux (35, 36), le palier excentré (48), au nombre d'au moins un, est un palier de came (48), et les extrémités (27, 72) sont une bride (27), dotée de trous (73, 74), et un embout (72).

24. Procédé selon la revendication 1 ou 22, **caractérisé en ce que** dans les zones (59, 60) proches des bords, la rugosité (Ra) équivaut au moins au double, et est notamment cinq fois plus grande, que dans la zone (61) annulaire médiane.

25. Procédé selon la revendication 1 ou 22, **caractérisé en ce que** dans la zone (61) annulaire médiane, la rugosité (Ra) équivaut au moins au double, et est notamment cinq fois plus grande, que dans les zones (59, 60) proches des bords.

26. Procédé selon la revendication 25, **caractérisé en ce que** la différence de rugosité entre la zone (61) annulaire médiane et les zones extérieures (56, 60) est si grande qu'il subsiste une différence de rugosité après l'usinage de finition.

27. Procédé selon la revendication 1 ou 22, **caractérisé en ce que** la rugosité (Ra) dans la zone (61) annulaire médiane est supérieure à 2 µm, de préférence supérieure à 5 µm.

28. Procédé selon la revendication 1 ou 22, **caractérisé en ce que** la rugosité (Ra) à l'extérieur de la zone (61) annulaire médiane est inférieure à 5 µm, de préférence inférieure à 2 µm, en particulier inférieure à 1 µm.

29. Procédé selon la revendication 1 ou 22, **caractérisé en ce que** lors de la première et/ou de la deuxième séquence d'usinage, l'usinage de précision est effectué respectivement avec des tranchants (32, 33) guidés sensiblement dans un plan.

30. Procédé selon la revendication 1 ou 22, **caractérisé en ce que** lors de la première et/ou de la deuxième séquence d'usinage, on réalise avec l'usinage de précision, sur la périphérie de chaque surface cylindrique usinée, respectivement au moins 1 000, de préférence au moins 2 000 facettes.

31. Procédé selon la revendication 1 ou 22, **caractérisé en ce que** lors de la première et/ou de la deuxième séquence d'usinage, on réalise avec l'usinage de précision respectivement une ondulation de moins de 1 µm, de préférence de moins de 0,5 µm, notamment de moins de 0,15 µm.

32. Procédé selon la revendication 1 ou 22, **caractérisé en ce que** lors de la première séquence d'usinage, on réalise avec l'usinage de précision les surfaces cylindriques des paliers centrés (35, 36) et des paliers excentrés (48) avec un écart angulaire inférieur à 0,5°, notamment inférieur à 0,2°, de préférence inférieur à 0,1°.

33. Procédé selon la revendication 1 ou 22, **caractérisé en ce que** lors de la première séquence d'usinage, on réalise avec l'usinage de précision les surfaces cylindriques des paliers centrés (35, 36) et des paliers excentrés (48) avec un écart de forme de moins de 0,4 %, notamment de moins de 0,2 %, de préférence de moins de 0,1 % de la course de consigne.

34. Procédé selon la revendication 1 ou 22, **caractérisé en ce que** les surfaces des paliers centrés (35, 36) et des paliers excentrés (48), lorsque celles-ci doivent présenter un bombage, sont réalisées avec l'usinage de précision lors de la première séquence d'usinage, d'abord de façon cylindrique dans le cadre de la précision d'usinage, et **en ce que** le bombage est réalisé au cours du finissage qui suit.

35. Procédé selon la revendication 1 ou 22, **caractérisé en ce que** l'usinage de précision est réalisé par tournage-fraisage à l'aide d'un outil de fraisage (30) dont le tranchant frontal, au nombre d'au moins un, est disposé dans un plan (34) orthogonal à son axe de rotation (19).

36. Procédé selon la revendication 1 ou 22, **caractérisé en ce que** l'usinage de précision est réalisé par tournage-fraisage à l'aide d'un outil de fraisage (30) dont le tranchant frontal (32), au nombre d'au moins un, est disposé sur une surface conique concentrique à son axe de rotation.

37. Procédé selon la revendication 36, **caractérisé en ce que** l'angle de cône est supérieur à 170°, de préférence supérieur à 175°.

38. Procédé selon la revendication 1 ou 22, **caractérisé en ce que** l'usinage de précision est réalisé par tournage-fraisage orthogonal, l'axe de rotation (19) de l'outil de fraisage (30) étant orienté à angle droit par rapport à l'axe de rotation (26) de l'arbre (23).

39. Procédé selon la revendication 1 ou 22, **caractérisé en ce que** l'usinage de précision est réalisé par tournage-fraisage orthogonal, l'axe de rotation (19) de l'outil de fraisage (30) étant orienté à angle droit par rapport à l'axe de rotation de l'arbre (23), mais en étant décalé d'un décalage d'axe (V) par rapport à celui-ci.

40. Procédé selon la revendication 39, **caractérisé en ce que** le décalage d'axe (V) est réglé en vue d'obtenir une différence de rugosité souhaitée entre une zone médiane du palier excentré (48) et des zones extérieures.

41. Procédé selon la revendication 1 ou 22, **caractérisé en ce que** l'outil de fraisage (32) présente au moins deux arêtes de coupe (32, 33) qui se situent dans un plan (34) commun orthogonal à l'axe de rotation (19) de l'outil de fraisage (30).

42. Procédé selon la revendication 1 ou 22, **caractérisé en ce que** l'outil de fraisage (30) est entraîné au moins à une vitesse de rotation qui présente un rapport d'au moins 500:1 avec la vitesse de rotation du vilebrequin (20).

43. Procédé selon la revendication 1 ou 22, **caractérisé en ce que**, au cours de la première séquence d'usinage, l'arbre (23) est logé dans des évidements (23, 25) frontaux entre deux pointes (21, 22) qui se situent sur une droite (64) commune.

44. Procédé selon les revendications 39 et 43, **caractérisé en ce que** pour l'usinage des paliers centrés (48) et des paliers excentrés (35, 36), la droite (64) est orientée à angle droit par rapport à l'axe de rotation (19) de l'outil de fraisage (30).

45. Procédé selon les revendications 39 et 43, **caractérisé en ce que** pour l'usinage des paliers centrés (48) et des paliers excentrés (35, 36), la droite (64) est orientée par rapport à l'axe de rotation (19) de l'outil de fraisage (30) sous un angle qui compense la flexion élastique de l'arbre (23) pendant l'usinage à la fraise.

46. Procédé selon la revendication 45, **caractérisé en ce que**, au cours de la rotation ou des quelques rotations de l'arbre (23), l'angle (α) est adapté à une élasticité associée à la position angulaire respective de l'arbre (23).

47. Procédé selon la revendication 1 ou 22, **caractérisé en ce que**, au cours de la première et de la deuxième séquence d'usinage, l'arbre (23) est monté respectivement de façon centrée.

48. Procédé selon la revendication 47, **caractérisé en ce que**, lors de l'usinage des paliers excentrés (35, 36) de l'arbre (23), la broche d'usinage (18) exécute un mouvement de poursuite vertical et l'arbre (23) exécute un mouvement de compensation horizontal, qui sont coordonnés l'un par rapport à l'autre de manière à produire la forme de surface respective souhaitée.

49. Procédé selon la revendication 48, **caractérisé en ce que** le mouvement de poursuite vertical et le mouvement de compensation horizontal suivent respectivement une oscillation sinusoïdale ou cosinusoïdale et se superposent pour donner un mouvement circulaire.

50. Procédé selon la revendication 1, 5 ou 23, **caractérisé en ce que** l'on procède à une compensation de croissance de broche pour compenser des effets de température.

51. Procédé selon la revendication 1 ou 22, **caractérisé en ce qu'**aussi bien la première que la deuxième séquence d'usinage est exécutée complètement en tant qu'usinage à sec.

52. Procédé selon la revendication 1 ou 22, **caractérisé en ce que** la vitesse de rotation de l'outil de fraisage (30) est fixée au-dessus de la fréquence propre du vilebrequin ou d'ondes harmoniques pouvant être activées.
